# NEUE EUROPÄISCHE PATENTSCHRIFT

(11) **EP 3 703 849 B2**
(45) Veröffentlichungstag und Bekanntmachung des Hinweises auf die Entscheidung über den Einspruch: **21.10.2026**
(45) Hinweis auf die Patenterteilung: 06.09.2023
(21) Anmeldenummer: 18792941.9
(22) Anmeldetag: 25.10.2018
(51) Int. Cl.: B01J 19/00

(54) **VORRICHTUNG UND VERFAHREN ZUR CHARAKTERISIERUNG VON KATALYTISCHEN PROZESSEN**
APPARATUS AND PROCEDURE FOR THE CHARACTERIZATION OF CATALYTIC PROCESSES
DISPOSITIF ET PROCÉDÉ DE CARACTÉRISATION DE PROCESSUS CATALYTIQUES

(30) Priorität: 03.11.2017 EP 17199924
(43) Veröffentlichungstag der Anmeldung: 09.09.2020
(73) Patentinhaber: HTE GmbH The High Throughput Experimentation Company, 69123 Heidelberg (DE)
(72) Erfinder: HUBER, Florian, 69123 Heidelberg (DE)
(74) Vertreter: Kudla, Karsten
(86) Internationale Anmeldenummer: PCT/EP2018/079301
(87) Internationale Veröffentlichungsnummer: WO 2019/086325

(56) Entgegenhaltungen:
- WO-A1-2008/080365
- WO-A1-2008/080365
- WO-A2-2005/063372
- WO-A2-2005/063372
- US-A- 4 035 168
- JOCHEN BERG ET AL: "Catalyst testing for hydrocracking and hydrotreating", INTERNET CITATION, 1 January 2015 (2015-01-01), pages 121 - 127, XP009504129, Retrieved from the Internet <URL:https://www.hte-company.com/fileadmin/content/04_News-Events/Publikationen_-_PDF_files/catalyst_testing_for_hydrocracking_and_hydrotreating_ptq_q1_2015.pdf> [retrieved on 20180315]
- HAAS ALFRED ET AL: "High throughput testing of hydroprocessing catalysts for VGO / Resid", NORTH AMERICAN CATALYST SOCIETY MEETING (NAM 25), 1 June 2017 (2017-06-01), XP055847502, Retrieved from the Internet <URL:https://nam.confex.com/nam/2017/mediafile/ExtendedAbstract/Paper15845/161114_AHfinalNAM2017_hte_Extended_Abstract_Refining.pdf> [retrieved on 20211005]
- DIK P P ET AL: "Composition of stacked bed for VGO hydrocracking with maximum diesel yield", CATALYSIS TODAY, ELSEVIER, AMSTERDAM, NL, vol. 220, 6 August 2013 (2013-08-06), pages 124 - 132, XP028793104, ISSN: 0920-5861, DOI: 10.1016/J.CATTOD.2013.07.004
- BERG JOCHEN, SAUER TILMAN, FEDERSEL CHRISTOPHER, VUKOJEVIC SASCHA, HAUCK PHILIPP, HUBER FLORIAN, HAAS HTE GMBH ALFRED: "Catalyst testing for hydrocracking and hydrotreating ", PTQ, 1 January 2015 (2015-01-01), pages 1 - 6, XP093191695
- ALFRED HAAS , FLORIAN HUBER , JOCHEN BERG: "High throughput testing of hydroprocessing catalysts for VGO / Resid", 25TH NORTH AMERICAN CATALYSIS SOCIETY MEETING (NAM25), 1 January 2017 (2017-01-01), pages 1 - 1, XP093191698
- DIK P.P.; KLIMOV O.V.; KORYAKINA G.I.; LEONOVA K.A.; PEREYMA V.YU.; BUDUKVA S.V.; GERASIMOV E.YU.; NOSKOV A.S.: "Composition of stacked bed for VGO hydrocracking with maximum diesel yield", CATALYSIS TODAY,, vol. 220, 6 August 2013 (2013-08-06), AMSTERDAM, NL , pages 124 - 132, XP028793104, ISSN: 0920-5861, DOI: 10.1016/j.cattod.2013.07.004
- HAGEMEYER ALFRED , VOLPE ANTHONY F: "Modern Applications of High Throughput R&D in Heterogeneous Catalysis", 1 January 2014, BENTHAM BOOKS, ISBN: 978-1-60805-873-0, article FLITTER CORNELIA , LUIS T. ALVARADO RUPFLIN, NADINE BREM, RINGO FODISCH, ALFRED HAAS, ARMIN LANGE DE OLIVEIRA, MICHAEL L. LEJKOWSK: "High Throughput Experimentation Applied in the Field of Technical Catalysis: Past, Present, Future", pages: 1 - 7, XP093191688
- Page 155 of the handbook Engineering Design, A Systematic Approach by G. Pahl and W.Beitz, 1996
- H. R. GODINI ET AL: "Methane Oxidative Coupling: Synthesis of Membrane Reactor Networks", INDUSTRIAL & ENGINEERING CHEMISTRY RESEARCH., vol. 51, no. 22, 22 May 2012 (2012-05-22), US, pages 7747 - 7761, XP055459069, ISSN: 0888-5885, DOI: 10.1021/ie202877r

## Beschreibung

Die vorliegende Erfindung betrifft ein mehrstufiges Verfahren, vorzugsweise ein Laborverfahren, zur Charakterisierung von katalytischen Prozessen, das nachfolgend CKP-Verfahren bezeichnet wird. Das CKP-Verfahren ist auf die Entwicklung von Katalysatoren sowie die Identifizierung von denjenigen Katalysatoren gerichtet, die sich für die betrachteten Prozesse besonders eignen. Mittels des Einsatzes des CKP-Verfahrens ist es auf der Basis von Labortests möglich, industrielle Verbundprozesse zu optimieren und dadurch Ausbeuten, Produktivität und Katalysatorlaufzeit zu verbessern. Weiterhin ist auch festzustellen, dass das CKP-Verfahren sich mit computergestützten Methoden koppeln lässt beziehungsweise einen Beitrag liefern kann, um computergestützten Simulationen zu verbessern, da mittels des CKP-Verfahrens experimentelle Daten mit einer hohen Genauigkeit bereitgestellt werden. Das erfindungsgemäße Verfahren umfasst zumindest ein Reaktionssystem, das zumindest zwei parallel angeordnete Reaktionsstränge aufweist. Zumindest einer der Reaktionsstränge, der erste Reaktionsstrang, umfasst eine serielle Anordnung von zwei oder mehr Rohrreaktoren. Zumindest ein weiterer Reaktionsstrang umfasst eine serielle Anordnung von Rohrreaktoren, wobei die Anzahl der Rohrreaktoren um zumindest einen Rohrreaktor geringer ist als im ersten Reaktionsstrang. Die in dem Reaktionssystem parallel angeordneten Rohrreaktoren, welche vorzugsweise mit Katalysator befüllt sind, werden mit Reaktandenstrom beziehungsweise mit Reaktandenströmen in Kontakt gebracht. Bei den Reaktandenströmen kann es sich um einphasige, gasförmige oder flüssige Stoffströme bzw. um mehrphasige Kombinationen von Gasen und/oder Flüssigkeiten handeln. Die innerhalb des Reaktionssystems generierten Produktströme, die aus unterschiedlichen Prozessstufen des mehrstufigen Verfahrens abgeleitet werden, werden einer analytischen Charakterisierung unterzogen. Vorzugsweise ist die Vorrichtung, mit der das erfindungsgemäße Verfahren durchgeführt wird, mit einer Gruppe von Reaktionssystemen ausgestattet. In einer derartigen Ausführungsform kann das Verfahren mit einer Vielzahl von Reaktionssystemen in paralleler Weise durchgeführt werden. Somit betrifft ein Aspekt der vorliegenden Erfindung in einer bevorzugten Ausführungsform und in Verbindung mit der Parallelisierung der Reaktorsysteme auch den Bereich der Hochdurchsatzforschung. Da es mittels der Vorrichtung und dem erfindungsgemäßen Verfahren möglich ist, komplexe katalytische Prozesse unter industriell relevanten Prozessbedingungen zu untersuchen, sind die Vorrichtung und das Verfahren von großem technischem Interesse.

Im Stand der Technik sind mehrstufige Vorrichtungen und Verfahren zur Untersuchung von Katalysatoren oder chemischen Prozessen bekannt. Beispielhaft hierfür ist die PCT-Anmeldung WO 2008/080365 A1 von Richard F. Bauman et al. zu nennen, in der mehrstufige Reaktorrohranordnungen zur katalytischen Hydrierung und Verarbeitung von Feedstocks beschrieben werden, die einen hohen Anteil an Verunreinigungen aufweisen. In Verbindung mit der Verarbeitung von schwerflüchtigen Feedstocks ist die Verwendung von mehrstufigen Verfahren und unterschiedlichen Katalysatoren von Bedeutung, um die Veredelung der Feedstocks stufenweise durchzuführen.

In einem Artikel im PTQ Magazin Q1 2015 (Seite 121 - 127) mit dem Titel "Catalyst testing for hydrocracking and hydrotreating" beschreiben Jochen Berg et al. die Durchführung von Untersuchungen zum Hydroprocessing unter industriell relevanten Bedingungen mittels Hochdurchsatzvorrichtung. In dem Artikel wird auch eine Fallstudie vorgestellt, die sich auf die Testung von Katalysatoren bezieht, welche innerhalb von einzelnen Rohrreaktoren in stapelförmiger Anordnung eingebracht wurden und welche dann unter gleichen Feedbedingungen getestet wurden. Die Hochdurchsatzvorrichtung besteht aus mehreren parallel angeordneten Rohrreaktoren, wobei die unterschiedlichen Prozessstufen innerhalb der stapelförmigen Anordnung der einzelnen Rohrreaktoren durchgeführt werden. Der Gesamtprozess umfasst die folgenden drei Prozessstufen: 1. Demetallisierung (HDM) von atmosphärischen Öldestillations-Rückständen, 2. Entschwefelung (HDS) bei einer moderaten Aktivität für HDS und 3. Entschwefelung (HDS) bei hoher HDS-Aktivität.

Godini et al. beschreiben in der Zeitschrift Industrial & Engineering Chemistry Research (2012), Bd. 51, Nr. 22 (Seite 7747-7761) ein Verfahren zur Optimierung eines chemischen Prozesses für die oxidative Methankupplung. Das Verfahren besteht in der optimierten Ausführungsform aus zwei Reaktionssträngen mit einem bzw. zwei seriell geschalteten Reaktionsräumen. Die Anzahl und Wirkbeziehung der Reaktionsstränge und Reaktionsräume dient der Maximierung der Gesamtprozessleistung. Die Reaktionsräume, insbesondere der erste in den beiden Reaktionssträngen angeordnete Reaktionsraum, ein Festbettreaktor (FBR) und ein konventionell gepackter Membranreaktor (CPBMR), erfüllen hierbei unterschiedliche Funktionen und stehen unterschiedliche Prozessstufen dar. Die Prozessoptimierung basiert auf der theoretischen Betrachtung der Wirkbeziehungen zwischen den drei Reaktionsräumen. Die Information über die individuelle Leistung der drei Reaktionsräume stammt aus separaten Untersuchungen der drei Reaktionsräume ohne die Wirkbeziehungen im beschriebenen Prozess.

Die der vorliegenden Erfindung zugrunde liegenden Aufgaben sind es, ein Verfahren bereitzustellen, mit dem katalytische Tests mit einer hohen Genauigkeit und einer hohen Präzision durchgeführt werden können. Eine weitere Aufgabe ist es, das Verfahren so auszugestalten, dass mittels des Verfahrens auch mehrstufige Reaktionsabläufe untersucht werden können, die dadurch charakterisiert sind, dass die einzelnen Prozessstufen verschiedene Katalysatorsysteme und/oder individuell einstellbare Reaktionsbedingungen erfordern.

Die hier genannten Aufgaben werden dadurch gelöst, dass ein Verfahren zur Charakterisierung von katalytischen Prozessen bereit gestellt wird, nachfolgend CKP-Verfahren genannt, in einem Reaktionssystem mit zwei oder mehr parallel angeordneten Reaktionssträngen, die eine unterschiedliche Anzahl von Rohrreaktoren aufweisen und wobei ein einzelner Reaktionsstrang mehrere seriell verbundenen Rohrreaktoren oder einen einzelnen Rohrreaktor umfasst, wobei Verbindungsleitungen zwischen den Rohrreaktoren keine Verbindungsleitungen mit Schaltventilen aufweisen oder die Verbindungsleitungen zwischen den Rohrreaktoren nur mit Schaltventilen ausgestattet sind, bei denen es sich um Zuführungselemente handelt, und auf eine Zwischenprobenentnahme verzichtet wird, und wobei die Verbindungsleitungen ein Innenvolumen aufweisen, das um 50 % kleiner ist als das Innenvolumen des Rohrreaktors und wobei das Verfahren nachfolgende Schritte umfasst:
i) die einzelnen Rohrreaktoren der Reaktionsstränge mit Katalysatormaterial befüllt werden,
ii) jedem Reaktionsstrang jeweils ein Reaktandenstrom zugeführt wird, wobei die Reaktandenströme jeweils die gleiche chemische Zusammensetzung aufweisen,
iii) die den Reaktionssträngen zugeführten Reaktandenströme in den unterschiedlichen Reaktionssträngen unterschiedlichen Anzahlen von Prozessstufen unterzogen werden, wobei eine einzelne Prozessstufe entweder einen Reaktionstyp und/oder einen Umsatzgrad einer gegebenen Reaktion umfasst,
iv) die aus den parallel angeordneten Reaktionssträngen ausgeleiteten Produktströme werden einer analytischen Charakterisierung unterzogen,
v) die bei der analytischen Charakterisierung der Produktströme aus den unterschiedlichen Reaktionssträngen erzielten Daten werden in eine Beziehung gesetzt.

In einer weiter bevorzugten Ausführungsform ist das CKP-Verfahren dadurch gekennzeichnet, dass jedes Reaktionssystem zwei oder mehr parallel angeordnete Reaktionsstränge umfasst, die eine unterschiedliche Anzahl von Rohrreaktoren aufweisen, ein einzelner Reaktionsstrang umfasst mehrere seriell verbundenen Rohrreaktoren oder einen einzelnen Rohrreaktor und das Verfahren durch die nachfolgend genannten Schritte gekennzeichnet ist:
i) die einzelnen Rohrreaktoren der Reaktionsstränge werden mit Katalysatormaterial befüllt,
ii) jedem Reaktionsstrang wird jeweils ein Reaktandenstrom zugeführt,
iii) die den Reaktionssträngen zugeführten Reaktandenströme werden in den unterschiedlichen Reaktionssträngen einer unterschiedlichen Anzahl von Prozessstufen unterzogen, wobei eine einzelne Prozessstufe entweder einen Reaktionstyp und/oder einen Umsatzgrad einer gegebenen Reaktion umfasst,
iv) die aus den parallel angeordneten Reaktionssträngen ausgeleiteten Produktströme werden einer analytischen Charakterisierung unterzogen,
v) die bei der analytischen Charakterisierung der Produktströme aus den unterschiedlichen Reaktionssträngen erzielten Daten werden in eine Beziehung gesetzt; die Schritte i) - v) beziehungsweise die Schritte ii) - v) werden in den zwei oder mehr Reaktionssystemen gleichzeitig durchgeführt.

Dass die zugeführten Reaktandenströme in den unterschiedlichen Reaktionssträngen unterschiedlichen Anzahlen von Prozessstufen unterzogen werden bedeutet, dass in einem Reaktionsstrang die vollständige Anzahl der Prozessstufen durchgeführt wird und in zumindest einem Reaktionsstrang eine reduzierte Anzahl von Prozessstufen durchgeführt wird, die zumindest eine Prozessstufe weniger aufweist als der mehrstufige Prozess, der mit der vollständigen Anzahl von Prozessstufen durchgeführt wird.

In einer bevorzugten Ausführungsform ist das erfindungsgemäße Verfahren dadurch gekennzeichnet ist, dass jede Prozessstufe in einem separaten Rohrreaktor durchgeführt wird, wobei jeder Reaktionsstrang jeweils über diejenige Anzahl an Rohrreaktoren verfügt, die der Anzahl der in diesem Reaktionsstrang durchgeführten Prozessstufen entspricht. Sofern in einem Reaktionsstrang nur eine Prozessstufe durchgeführt wird, ist es bevorzugt, dass der entsprechende Reaktionsstrang nur einen einzelnen Rohrreaktor umfasst.

In einer bevorzugten Ausführungsform weist das CKP-Verfahren eine Anzahl der Prozessstufen im Bereich von 2 - 40 auf. Die Anzahl der Prozessstufen wird im Rahmen der vorliegenden Schrift mit A_{PS} bezeichnet. Der Begriff der Prozessstufe bezieht sich auf einen Reaktionstyp oder einen Umsatzgrad von einer gegebenen Reaktion. Eine auf den Umsatzgrad bezogene Prozessstufe bezieht sich auf einen Umsatzgrad, der sich gegenüber einem anderen Umsatzgrad in einer charakteristischen Weise unterscheidet wie nachfolgend ausgeführt. Der Reaktionstyp beschreibt die Art einer chemischen Umwandlung, der Umsatzgrad die Menge an umgesetzten Reaktanden beziehungsweise die Menge an gebildetem Produkt. Als Beispiele für Reaktionstypen, die jeweils eine Prozessstufe darstellen, sind Hydrierung, Krackprozesse, Isomerisierung, Alkylierung, Entschwefelung, Entstickung zu nennen. Der Reaktionstyp und/oder der Umsatzgrad sind kennzeichnend für die Beschreibung einer Prozessstufe. Der bei der Prozessstufe erhaltende Produktstrom lässt sich qualitativ und quantitativ charakterisieren und ist somit charakteristisch für eine Prozessstufe. Die Prozessstufe hängt von einer Vielzahl von Parametern ab, die Temperatur und Katalysator einschließen. Von Bedeutung ist, dass nach der Durchführung einer Prozessstufe eine analytisch messbare Veränderung des Produktstromes erhalten werden kann. Das erfindungsgemäße Verfahren bietet den Vorteil einer gleichzeitigen Durchführung von Vergleichsversuchen unter nahezu identischen Bedingungen. Damit es sich bei der Prozessstufe um eine Prozessstufe handelt, soll der Produktstrom eine chemische Veränderung gegenüber dem Reaktandenstrom aufweisen. In Bezug auf den Umsatzgrad eines Reaktionstyps können die jeweils gewünschten Umsatzgrade von dem untersuchten chemischen Verfahren abhängen, das Gegenstand der Untersuchung ist. Beispielsweise kann das CKP-Verfahren dazu verwendet werden, einen zweistufigen Prozess zu untersuchen, der eine Entstickung und eine Krackung umfasst. In dem Beispiel wird ein stickstoffhaltiger Reaktandenstrom eingesetzt. Der für die Krackung eingesetzte Katalysator weist nur eine geringe Resistenz gegenüber dem Stickstoff auf. Daher ist zunächst eine Entstickung des stickstoffhaltigen Reaktandenstroms vorzunehmen, was in einer ersten Prozessstufe erfolgt. Der gewünschte Umsatzgrad ist dann erreicht, wenn der Stickstoffgehalt im Produktstrom nach der Entstickung einen Schwellenwert unterschreitet, damit der Produktstrom in der nachfolgenden Prozessstufe eingesetzt werden kann, ohne dabei den Krackkatalysator zu vergiften.

Weiter vorzugsweise liegt die Anzahl der Prozessstufen im Bereich von 2 - 20, ganz besonders bevorzugt ist die Anzahl an Prozessstufen im Bereich von 3 - 10. Die Anzahl der Prozessstufen hat einen Einfluss auf die Komplexität des erfindungsgemäßen Verfahrens. Beziehungsweise ist die Komplexität des Verfahrens dadurch gekennzeichnet, welche Gesamtzahl an Reaktionssystemen und welche Anzahl an Prozessstufen innerhalb der einzelnen Reaktionssysteme untersucht werden. Der Grund ist auch darin gegeben, dass die Handhabbarkeit des Verfahrens durch die Handhabbarkeit der Anzahl an Reaktoren einer Begrenzung unterworfen ist. Aus Gründen der Praktikabilität ist es vorteilhaft, dass die Gesamtzahl an Reaktoren, die für das erfindungsgemäße Verfahren eingesetzt wird, im Bereich von bis zu 100 Reaktoren liegt, vorzugweise im Bereich von 6 - 80 Reaktoren, weiter vorzugsweise im Bereich von 8 - 60 Reaktoren. Im Rahmen der vorliegenden Beschreibung werden die Begriffe Reaktionsstufe, Verfahrensstufe und Prozessstufe werden als synonyme Begriffe verwendet. Ein bevorzugter Aspekt der Erfindung betrifft jedoch auch die Verfahrensbedingungen und die Beheizung der Reaktoren, wobei das Verfahren besonders bevorzugt ist, wenn die Reaktoren der ersten Prozessstufe bei der gleichen Temperatur gelagert werden, weiter bevorzugt ist es, wenn die Reaktoren der ersten Prozessstufe von den gleichen Temperierungselemente beheizt werden, da dadurch eine genauere thermische Kontrolle und Regelung der Reaktortemperatur sichergestellt werden kann. Dadurch kann die Vergleichbarkeit der Daten noch weiter erhöht werden.

Bei der Durchführung des CKP-Verfahrens weisen die Reaktandenströme, die den Reaktionssträngen gemäß Schritt ii) zugeführt werden, jeweils die gleiche chemische Zusammensetzung auf. Gemäß dem Schritt ii) wird jedem Reaktionsstrang jeweils ein Reaktandenstrom zugeführt beziehungsweise wird der Reaktandenstrom jeweils dem ersten Rohrreaktor des Reaktionsstrangs zugeführt.

Vorzugsweise ist das CKP-Verfahren dadurch gekennzeichnet, dass die Reaktandenströme, die den Reaktionssträngen zugeführt werden, in zumindest einer Mengenstromgröße aus der Gruppe Stoffmengenstrom, Volumenstrom, Massenstrom übereinstimmen. Weiter vorzugsweise stimmen die Reaktandenströme, die den Reaktionssträngen zugeführt werden, in zwei Mengenstromgrößen überein, noch weiter vorzugsweise stimmen die Reaktandenströme, die den Reaktionssträngen zugeführt werden, in drei Mengenstromgrößen überein.

In einer weiter bevorzugten Ausführungsform ist das CKP-Verfahren dadurch gekennzeichnet ist, dass bei der Durchführung von Schritt iii) den nachgeordneten Rohrreaktoren der einzelnen Reaktionsstränge innerhalb eines Reaktionssystems zusätzlich Reaktandenstrom zugeführt wird, und zwar jedem nachgeordneten Rohrreaktor jeweils die gleiche Zusammensetzung und die gleiche Menge.

In einer bevorzugten Ausführungsform des CKP-Verfahrens werden die Rohrreaktoren des Reaktionssystems jeweils einzeln bei einer Temperatur im Bereich von -25 bis 900 °C gelagert beziehungsweise temperiert. Durch eine solche Art der Temperierung lassen sich Störungen zwischen benachbarten Rohrreaktoren unterbinden. Die Störungen können dadurch entstehen, dass die in den benachbarten Rohrreaktoren ablaufenden Prozessstufen mit einer sehr unterschiedlichen Wärmetönung verbunden sind, die zu unkontrollierten Temperatureffekten in der Umgebung führen. Bei stark exothermen Prozessen kann dies beispielsweise der Fall sein.

Vorzugsweise wird das CKP-Verfahren in der Art und Weise durchgeführt, dass die Rohrreaktoren unterschiedlicher Prozessstufen eines Reaktionssystem bei unterschiedlichen Temperaturen und gleiche Prozessstufen eines Reaktionssystems bei der gleichen Temperatur gelagert, wobei die Temperatur im Bereich von -25 bis 900 °C liegt, vorzugsweise liegt die Temperatur im Bereich von 0 bis 800 °C. Hier kann es auch ein besonderer Vorteil sein, dass die Rohrreaktoren der gleichen Prozessstufen in dem gleichen Block mit Heizelementen gelagert werden, was eine sehr hohe Genauigkeit bei der Einstellung der Temperatur ermöglicht. Dadurch ist die Vergleichbarkeit der einzelnen Prozessstufen besonders genau, was mit einem Aspekt der Erfindung verbunden ist. Die Auswahl des bevorzugten Beheizungssystems hängt sowohl von der Art des chemischen Verfahrens ab, das jeweils Gegenstand der Untersuchung ist, als auch von der Dimensionierung der Rohrreaktoren. Falls das chemische Verfahren mit einer starken Wärmetönung verbunden ist, dann sind einzelne Beheizungsvorrichtungen für jeden Rohrreaktor von Vorteil. Insbesondere ist es jedoch auch vorteilhaft, dass die Rohrreaktoren eines Reaktionssystems, die die gleiche Verfahrensstufe aufweisen, mittels einer gemeinsamen Beheizungsvorrichtung temperiert werden, da dadurch nahezu identische Bedingungen in Bezug auf die Temperierung gewährleistet werden können, sofern keine starke Wärmetönung auftritt, durch die sich die Rohrreaktoren gegenseitig stören würden.

Das CKP-Verfahren bietet zahlreiche Ausführungsformen und Anwendungsmöglichkeiten.

Das CKP-Verfahren kann zur Untersuchung von katalytischen Slurry-Prozessen genutzt werden, beispielsweise Resid upgrading, Fischer-Tropsch-Synthese oder Hydrierung von Fettsäuren (Fetthärtung). Somit ist zu erkennen, dass das CKP-Verfahren sehr vielseitig eingesetzt werden kann.

Eine weitere Ausführungsform der Erfindung ist dadurch gegeben, dass die Rohrreaktoren in Form von kontinuierliche Wirbelbettreaktoren ausgestaltet sind. Gemäß dem Schritt i) werden die einzelnen Rohrreaktoren der Reaktionsstränge mit Katalysatormaterial befüllt und gemäß dem Schritt ii) wird jedem Rohrreaktor jeweils ein Reaktandenstrom zugeführt wird.

Der Begriff Rohrreaktoren bezieht sich auf sämtliche Körper, die eine lineare Achse aufweisen, die mindestens doppelt so lang ist wie der Durchmesser der linearen Achse und die einen Hohlraum entlang der linearen Achse aufweisen. Ein Ende des Körpers bildet den Zugang zu dem Hohlraum auf und ein Ende des Körpers bildet den Ausgang zu dem Hohlraum. Vorzugsweise ist der Körper, der den Rohrreaktor bildet, zylinderförmig ausgeformt. Vorzugsweise umfassen die Rohrreaktoren ein metallisches Material, weiter vorzugsweise umfassen die Rohrreaktoren Edelstahl als metallisches Material. Als weiterhin können die Rohrreaktoren auch Keramikeinlagen umfassen, vorzugsweise keramische Einlegerohre.

Vorzugsweise sind die Rohrreaktoren so ausgestaltet, dass deren Innendurchmesser im Bereich von 2 - 50 mm und deren Länge im Bereich von 5 - 150 cm liegen. Weiter vorzugsweise liegt der Innendurchmesser der Rohrreaktoren im Bereich von 3 - 25 mm und die Länge der Rohrreaktoren im Bereich von 5 - 150 cm. Vorzugsweise liegt die Länge der Rohrreaktoren im Bereich von 15 cm - 80 cm. Darüber hinaus ist es bevorzugt, dass die einzelnen Rohrreaktoren den gleichen Innendurchmesser und die gleiche Länge aufweisen. Vorzugsweise liegen der Innendurchmesser im Bereich von 3 - 25 mm und die Länge vorzugsweise im Bereich von 15 cm - 80 cm. Bei Rohrreaktoren handelt es sich um Reaktionsrohre beziehungsweise weisen die Rohrreaktoren zumindest auch ein Reaktionsrohr auf, in welchem Elemente zur Fixierung des Katalysatormaterials enthalten sein können. Aufbau von Reaktoren und die Fixierung von Katalysatorbetten sind dem Fachmann bekannt.

In einer noch weiter bevorzugten Ausführungsform ist das CKP-Verfahren dadurch gekennzeichnet, dass die Rohrreaktoren der gleichen Prozessstufe eines Reaktionssystems jeweils die gleichen Katalysatoren enthalten. Vorzugsweise liegen die Katalysatoren in Partikelform vor und der Partikeldurchmesser ist im Bereich von 1 - 10.000 µm, vorzugsweise von 50 - 5.000 µm, weiter vorzugsweise 100 - 4.000 µm. Sofern es sich bei den Partikeln um nicht-sphärische Partikel handelt, so bezieht sich der Begriff Partikeldurchmesser auf den äquivalenten Durchmesser einer Kugel mit der gleichen spezifischen Oberfläche, berechnet als 6*Partikelvolumen/Partikeloberfläche. Die eingesetzten Katalysatorpartikel können mittels sämtlicher Verfahren hergestellt werden, die dem Fachmann bekannt sind. Beispielsweise können als Verfahrens zur Herstellung der Katalysatoren diejenigen Verfahren verwendet werden, die Schritte wie Fällung, Trocknung, Imprägnierung, Siebung, Pelletierung, Extrudierung, Sprühtrocknung, Kalzinierung umfassen.

Dabei ist in keiner Weise ausgeschlossen, dass die Katalysatorpartikel Größenordnung aufweisen, die größer als 10.000 µm sind und die in der Form von Extrudaten vorliegen. Jedoch muss natürlich die Größe des verwendeten Reaktionsrohrs der Weise gewählt werden, dass diese zu der Dimensionierung des Katalysatormaterials passt. Einer der Vorteile des CKP-Verfahrens ist, dass kleine Mengen getestet werden. Somit werden auch kleine Partikel bevorzugt verwendet, die in kleinen Rohrreaktoren untersucht werden.

In einer bevorzugten Ausführungsform des CKP-Verfahrens, dass innerhalb des Reaktionssystems die Rohrreaktoren der gleichen Prozessstufe jeweils den gleichen Katalysator oder die gleichen Katalysatoren enthalten, wobei die Katalysatoren mit Inertmaterial verdünnt sind und wobei die Katalysatoren einer Prozessstufe den gleichen Verdünnungsgrad mit Inertmaterial enthalten, der durch ein Massenverhältnis von Katalysator-zu-Inertmaterial im Bereich von 0,01 : 100 bis 100 : 1 gekennzeichnet ist, vorzugsweise im Bereich von 1 : 10 bis 10 :1. Hierbei weist das Inertmaterial einen Partikeldurchmesser im Bereich 1 - 10.000 µm auf, vorzugsweise einen Partikeldurchmesser im Bereich 50 - 4.000 µm, wobei es bevorzugt ist, dass das Verhältnis von Reaktorinnendurchmesser zu Partikeldurchmesser des Inertmaterials größer 25 : 1 ist. Die Verdünnung mit Inertmaterial kann die Genauigkeit der Untersuchung weiter verbessern. Das bedeutet auch, dass sich aus der Durchführung des CKP-Verfahrens in der Gegenwart von Inertmaterial Synergieeffekte geben, was eine Steigerung der Genauigkeit betrifft, die mittels der im Stand der Technik bekannten Verfahren in dieser Weise bisher nicht erreicht werden. Die Verwendung von Inertmaterial ist insbesondere dann vorteilhaft, wenn die mittels der Katalysatoren durchgeführten Reaktionen eine Wärmetönung mit einem durch die Reaktion bedingten Anstieg der Reaktortemperatur von größer als 1 °C aufweisen beziehungsweise das Verhältnis von Reaktorinnendurchmesser zu Katalysatorpartikeldurchmesser kleiner als 25 : 1 beträgt. Bei nicht-sphärischen Partikeln bezieht sich der Begriff Durchmesser auf den äquivalenten Durchmesser, den eine Kugel mit der gleichen spezifischen Oberfläche wie der betrachteten Partikel aufweist, berechnet als 6*Partikelvolumen/Partikeloberfläche. Das Verhältnis von Reaktorinnendurchmesser zu Partikeldurchmesser des Inertmaterials ist vorzugsweise grösser als 25 : 1. Das Inertmaterial ist dadurch gekennzeichnet, dass es keine beziehungsweise keine merkliche katalytische Aktivität aufweist. Vorzugsweise umfasst das Inertmaterial ein Material aus der Gruppe Sand (SiOz), Quarz, Korund oder SiC.

Gemäß dem Schritt iv) werden die aus den parallel angeordneten Reaktionssträngen ausgeleiteten Produktströme einer analytischen Charakterisierung unterzogen, wobei das Ergebnis der Analyse der unterschiedlichen Produktströme in Beziehung gesetzt wird. Vorzugsweise umfasst das Inbeziehungsetzen eine Differenzbildung, wobei die Massenbilanzierung durch eine Standardabweichung von +/- 10 Gew.-% gekennzeichnet ist, vorzugsweise ist die Massenbilanzierung durch eine Standardabweichung von +/- 5 Gew.-% gekennzeichnet, weiter vorzugsweise durch eine Standardabweichung von +/- 2 Gew.-%, noch weiter vorzugsweise durch eine Standardabweichung von +/- 1 Gew.-%. Die Massenbilanz wird auch durch die jeweiligen Prozessparameter mitbestimmt. Von Vorteil in Verbindung mit dem erfindungsgemäßen Verfahren ist es, dass auf die Zwischenprobenentnahme teilweise, vorzugweise vollständig, verzichtet wird. Dadurch wird die Störung des Reaktionssystems ausgeschlossen, die ansonsten durch die Zwischenprobenentnahme auftritt. Zu den Störungen zählen beispielsweise Druckschwankungen beim Schalten der Ventile, um Probenströme zu entnehmen, Störungen der Stoffbilanzierung durch Fehler, die in Verbindung mit dem Ableiten von Strömen stehen, Störungen der katalytischen Umsetzung beziehungsweise irreversible Schädigung der Katalysatoraktivität in Verbindung mit dem Ableiten von Probenströmen.

Anhand der beispielhaften Ausführungsformen sollen die vorteilhaften Aspekte des erfindungsgemäßen Verfahrens näher illustriert werden. Die Ausführungen beziehen sich auf ein Verfahren zum Hydroprocessing von kohlenwasserstoffhaltigen Fuels oder Ölen (kohlenwasserstoffhaltige Phase). Dem Reaktionssystem wird ein Reaktandenstrom zugeführt, der eine kohlenwasserstoffhaltige Phase umfasst, welche im Reaktionssystem als flüssige Phase oder als flüssige Phase in Verbindung mit gasförmiger Phase vorliegt. Weiterhin umfasst Reaktandenstrom der Reaktandenstrom Wasserstoff als gasförmigen Reaktanden. Bei der Zuführung der kohlenwasserstoffhaltigen Phase zum Reaktionssystem beträgt die LHSV 1 h⁻¹. Bei einem Gesamtkatalysatorvolumen des Reaktionssystems von 5 ml entspricht dies einem flüssigen Reaktandenstrom von 5 ml/h. Im Vergleich dazu, bei einem Gesamtkatalysatorvolumen von 50 bzw. 500 ml beträgt der Reaktandenstrom 50 bzw. 500 ml/h.

Um eine Menge an flüssiger Probe zu erhalten, die ausreichend ist, um die einzelne Reaktionsstufe zu charakterisieren, ist es notwendig eine gewisse Mindestmenge an Proben zu entnehmen. Bei der Durchführung des Verfahrens sollte das Probennahmevolumen beispielsweise im Bereich von 5 - 10 ml pro Probe liegen. Die Entnahme dieser Probenmenge zwischen den Rohrreaktoren, die gemäß dem Stand der Technik praktiziert wird, führt zu Eingriffen in das Verfahren, die Störung des Systems betrachtet werden, wobei sich der Umfang der Störung und die damit verbundenen Störzeiten näher bestimmen lassen.

Unter dem Begriff Störzeit ist im Rahmen der vorliegenden Beschreibung derjenige Zeitraum zu verstehen, in dem aufgrund der Probenentnahmezeit kein flüssiger Reaktandenstrom in die nachfolgenden Rohrreaktoren geleitet wird, wodurch die Reaktionsbedingungen der Folgereaktion abgeändert und das chemische Gleichgewicht gestört werden. Das Vorliegen von Störungen und die Dauer der Störzeit führt zur Beeinträchtigung der Genauigkeit und der Präzision des Verfahrens.

Die Durchführung des Verfahrens zum Hydroprocessing von kohlenwasserstoffhaltigen Fuels oder Ölen mittels des erfindungsgemäßen Verfahrens umfasst eine Zeitdauer von mehreren Stunden, mehreren Tagen oder auch mehreren Wochen. Beispielsweise 24 h, 48 h, 100 h oder 150 h, in einzelnen Fällen auch 100 Tage und darüber.

Für die Dauer von Störzeiten ist die nachfolgende Abschätzung gegeben, wobei diese anhand des eingesetzten Katalysatorvolumens bestimmt wurde, die bei einer Durchführung des Verfahrens eingesetzt wird. Die Abschätzung bezieht sich auf die Durchführung des Verfahrens unter Verwendung einer LHSV von 1 h⁻¹ und einem Probennahmevolumen von 5 - 10 ml pro Probe.

Beträgt das Katalysatorvolumen 5 ml, so liegt die Störzeit im Bereich von 1 - 2 Stunden pro Probennahme. Beträgt das Katalysatorvolumen 50 ml, so liegt die Störzeit im Bereich von 6 - 12 Minuten pro Probennahme.

Beträgt das Katalysatorvolumen 500 ml, so liegt die Störzeit im Bereich von 36 bis 72 Sekunden pro Probennahme.

Bei Pilotanlagen, bei denen das Katalysatorvolumen über 500 ml liegt, liegen die Störzeiten, die durch Probenentnahme zwischen den Rohrreaktoren verursacht werden, im Sekundenbereich. Bei den in der vorliegenden Erfindung bevorzugten Rohrreaktoren liegt die die Reaktion in den nachfolgenden Rohrreaktoren beeinträchtigende Störzeit im Minuten- bis Stundenbereich. Anhand des Beispiels wird ersichtlich, dass hier ein besonderer Vorteil des Verfahrens zu erkennen ist. Anhand des Beispiels wird ersichtlich, dass hier ein besonderer Vorteil des Verfahrens zu erkennen ist.

Vorzugsweise betrifft das erfindungsgemäße Verfahren die Charakterisierung von Prozessen, bei denen flüssige Produktströme entstehen oder flüssige Produktströme in Gegenwart von gasförmigen Produktströmen. Weiterhin bevorzugt ist es, dass das CKP-Verfahren parallel durchgeführt wird; vorzugweise umfasst die Durchführung des CKP-Verfahrens mindestens zwei parallel angeordnete Reaktionssysteme, weiter vorzugsweise vier parallel angeordnete Reaktionssystem, darüber hinaus bevorzugt acht parallel angeordnete Reaktionssysteme. Weiter vorzugsweise ist das Verfahren dadurch gekennzeichnete, dass pro Reaktionssystem mindestens eine flüssige Probe pro Reaktionsstrang und pro Testtag genommen wird, wobei das Volumen der einzelnen flüssigen Proben vorzugsweise > 1 ml, weiter vorzugsweise > 2 ml, weiter vorzugsweise > 4 ml.

Vorzugsweise ist das CKP-Verfahren dadurch gekennzeichnet, dass die Reaktandenströme, die einem Reaktionssystem zugeführt werden, ausgewählt sind aus der Gruppe Ergas (Kohlenwassestoffe C1-C4), Erdöl, Naphtha, Benzin, Kerosin, Diesel, Mitteldestillate, Vakuumgasöl, atmosphärisches oder Vakuum-Rückstandsöl, Mineralöle, biostämmige Öle, Wasserstoff oder Synthesegas.Vorzugsweise handelt es sich bei den mittels des CKP-Verfahrens durchgeführten Reaktionen um Reaktionen aus dem Raffineriebereich, der Petrochemie oder Synthesegaschemie. Die Reaktionen aus dem Raffineriebereich können ausgewählt sein aus der Gruppe Hydrierung, Krackprozesse, Isomerisierung, Entschwefelung, Entstickung, Dearomatisierung, Deoxygenierung, Demetallisierung, Dechlorinierung. Die Reaktionen aus der Petrochemie können ausgewählt sein aus der Gruppe Reformierung, Alkylierung, Transalkylierung, Hydrierung, Dehydrierung, Isomerisierung, milde Krackprozesse, Metathese, Oligomerisierung, Erdgas (C1-C4) zu Aromaten. Die Reaktionen der Syngaschemie können ausgewählt sein aus der Gruppe Fischer-Tropsch-Synthese, Methanol und Dimethylether(DME)-Synthese, Methanisierung, Synthese höherer Alkohole, Methanol zu Olefinen (MTO), Methanol zu Benzin (MTG), Methanol zu Aromaten (MTA).Eine bevorzugte Ausführungsform umfasst die Kombination von mehreren der oben genannten Reaktionstypen, beispielsweise die Kombination von Demetallisierung, Entschwefelung und Entstickung, Krackung von Vakuumgasölen zur Erzeugung von Petrochemikalien, Mineralölen und Kraftstoffen. Ein weiters Beispiel umfasst die Herstellung von Mineralölen aus Rückstandsölen mittel Demetallisierung, Entschwefelung und Entstickung, Krackung, Isomerisierung und finaler Hydrierung. In dieser bevorzugten Ausführungsform des CKP-Verfahrens werden die aufgeführten Prozesse voneinander getrennt in hintereinandergeschalteten Reaktoren bei unterschiedlichen Reaktionstemperaturen durchgeführt.

In einer bevorzugten Ausführungsform ist das CKP-Verfahren dadurch gekennzeichnet, dass dieses bei einem Druck im Bereich von 1 - 500 bara durchgeführt, wobei die die flüssigen Reaktanden mit einer LHSV im Bereich von 0,05 - 20 h⁻¹ und die Gase mit einer GHSV im Bereich von 10 - 50.000 h⁻¹ zugeführt werden. Vorzugsweis wird das CKP-Verfahren bei einem Druck im Bereich von 1 -250 bara durchgeführt. Die Größenangabe bara bezieht sich auf den absoluten Druck. Vorzugsweise werden bei der Durchführung des CKP-Verfahrens Rohrreaktoren eingesetzt und vorzugsweise weisen die eingesetzten Rohrreaktoren bei der gleichen Prozessstufe jeweils das gleiche Volumen und den gleichen Durchmesser auf.

Der Vorteil des CKP-Verfahrens liegt darin, dass die Produktströme der einzelnen Reaktorstufen der mehrstufigen Prozesse zeitgleich und störungsfrei erzeugt, analysiert und über Differenzbildung verglichen werden können. Vorzugsweise ist das Verfahren dadurch gekennzeichnet, dass die flüssigen Reaktanden mit einer LHSV im Bereich von 0,05 - 25 h⁻¹ , weiter vorzugsweise von 0,1 - 20 h⁻¹, und die Gase mit einer GHSV im Bereich von 10 - 75.000 h⁻¹ zugeführt werden, weiter vorzugsweise von 100 - 50.000 h⁻¹. Vorzugsweise erfolgt die Zuführung der Reaktandenströme zu den Rohrreaktoren eines Reaktionssystems über die gleiche Zuführungseinheit, wobei für die Zudosierung der Flüssigkeiten vorzugsweise Hochdruckpumpen eingesetzt werden.

Ein weiterer Aspekt der Erfindung ist ein Verfahren, bei dem eine Gruppe von CKP-Verfahren gleichzeitig durchgeführt wird, wobei es bevorzugt ist, dass die Anzahl der gleichzeitig durchgeführten CKP-Verfahren im Bereich von 2 - 20 liegt. Weiter vorzugsweise ist die Anzahl der gleichzeitig durchgeführten CKP-Verfahren im Bereich von 4 - 10. Vorzugsweise werden jedem Reaktionssystem zumindest zwei Reaktandenströme gleicher chemischer Zusammensetzung zugeführt. Bezüglich des Parallelisierungsgrades ist festzustellen, dass der höhere Parallelisierungsgrad einen vorteilhaften Effekt mit sich bringt, was die Beschleunigung der Untersuchung und der Testung betrifft. Zu beachten ist auch, dass die Reaktionsuntersuchungen unter Bedingungen durchgeführt werden, die aus technischer Sicht sehr anspruchsvoll sind. Es ist auch denkbar, dass das Verfahren in Verbindung mit höheren Parallelisierungsgraden betrieben wird, jedoch ist der technische Aufwand und die Handhabbarkeit des Verfahrens dann auch höher.

Beschrieben ist auch eine Vorrichtung zur Charakterisierung von katalytischen Prozessen mittels des CKP-Verfahrens im Sinne der hier gegebenen Darstellung oder aber auch eine Vorrichtung zur gleichzeitigen Durchführung von mehreren CKP-Verfahren, die dadurch gekennzeichnet ist, dass die Vorrichtung über mehrere Reaktionssysteme verfügt, jedes Reaktionssystem verfügt über zumindest zwei parallel angeordnete Reaktionsstränge mit Rohrreaktoren, wobei die Reaktionsstränge mit unterschiedlichen Anzahl von Rohrreaktoren ausgestattet sind, wobei die Verbindungen zwischen den seriell angeordneten Rohrreaktoren der Reaktionsstränge entweder Verbindungsleitungen aufweisen, die keine Wirkverbindungen mit Schaltventilen aufweisen, oder dass die Verbindungsleitungen mit Schaltventilen ausgestattet sind, wobei die Verbindungsleitungen ein Volumen aufweisen, das um 50 % kleiner ist als das Innenvolumen des Rohrreaktors und es sich bei den mit den Verbindungsleitungen verbundenen Schaltventilen um Zuführungselemente handelt, mittels denen Fluidströme zugeführt werden.

Für den Fall, dass die Vorrichtung zur Durchführung des CKP-Verfahrens zwei Prozessstufen (d.h. A_{PS} = 2) umfasst, so ist weist die Vorrichtung ein Reaktionssystem mit zwei Reaktionssträngen, wobei ein Reaktionsstrang zwei seriell verbundene Rohrreaktoren und ein Reaktionsstrang einen einzelnen Rohrreaktor aufweist. Für den Fall einer Vorrichtung zur Durchführung des CKP-Verfahrens mit drei Prozessstufen (A_{PS} = 3) umfasst die Vorrichtung ein Reaktionssystem mit zumindest zwei Reaktionssträngen, wobei ein Reaktionsstrang drei seriell verbundene Rohrreaktoren aufweist sowie zumindest einen Reaktionsstrang der eine Zahl von Rohrreaktoren aufweist, die kleiner als drei ist.

In einer bevorzugten Ausführungsform ist die Vorrichtung dadurch gekennzeichnet, dass die einzelnen Verbindungsleitungen, durch welche die Rohrreaktoren innerhalb eines Reaktionsstrangs verbunden sind, mit einer oder mehreren Temperierungseinheiten versehen sind und die einzelnen Verbindungsleitungen jeweils bei der Temperatur geheizt werden, die der Temperatur des stromaufwärts der Verbindungsleitung positionierten Rohrreaktors entspricht.

Vorzugsweise liegen die Rohrreaktoren in Form von Rohrreaktoren vor und die Rohrreaktoren sind vertikal ausgerichtet, wobei die Vorrichtung dadurch gekennzeichnet ist, dass die Längsachsen der seriell verbundenen Rohrreaktoren eines Reaktionsstrangs entlang einer gemeinsamen Achsenlinie liegen oder dass die Längsachsen der Rohrreaktoren eines Reaktionsstrangs parallel angeordnet sind; die parallele Anordnung der Rohrreaktoren sind entweder mit U- oder S-förmigen Verbindungselementen versehen, mittels der U-förmigen Verbindungselemente lässt sich eine alternierende Durchströmung der verbundenen Rohrreaktoren erzielen, mittels der S-förmigen Verbindungselemente lässt sich eine gleichausgerichtete Durchströmung der Rohrreaktoren erzielen.

Die Flussrichtung der Reaktandenstroms durch die einzelnen Prozessstufen ist wählbar, so dass die einzelnen Rohrreaktoren stromaufwärts, stromabwärts oder in alternierender Weise durchströmt werden. Bei der parallelen Anordnung von Rohrreaktoren wird die Führung des Reaktandenstroms durch die Ausgestaltung der Verbindungselemente beziehungsweise Verbindungsleitungen (02) vorgegeben. Bevorzugt ist es dabei, dass die Rohrreaktoren stromabwärts durchströmt werden. Bei der Angabe der Strömungsrichtung in Verbindung mit der Flussrichtung ist zu beachten, dass dies auch eine vertikale Anordnung der Rohrreaktoren innerhalb der Vorrichtung umfasst. Nicht ausgeschlossen ist, dass die Rohrreaktoren auch eine geringe Abweichung gegenüber einer vertikalen Anordnung aufweisen, vorzugsweise ist die Abweichung jedoch 45 ° oder kleiner. Die parallele Anordnung der Rohrreaktoren beziehungsweise die Anordnung der Rohrreaktoren in einer lateralen Ebene, bietet den Vorteil, dass eine existierende Hochdurchsatzvorrichtung in die Vorrichtung umgewandelt werden kann. Somit kann das erfindungsgemäße Verfahren auch mit existierenden Vorrichtungen durchgeführt werden, wenn die in einer entsprechenden Weise umgerüstet und für das CKP-Verfahren angepasst werden.

In einer Ausführungsform ist die Vorrichtung dadurch gekennzeichnet, dass die endständigen Rohrreaktoren jedes Reaktionsstrangs der Reaktionssysteme oder des Reaktionssystems mit einer Druckhaltungsvorrichtung ausgestattet sind, vorzugsweise sind die endständigen Rohrreaktoren jedes Reaktionsstrangs der Reaktionssysteme mit einer gemeinsamen Druckhaltungsvorrichtung ausgestattet.

Der Vorteil des CKP-Verfahrens ist, dass die mehrstufige parallele Durchführung mit einer abgestuften Anzahl von Rohrreaktoren und den damit verbundenen Prozessstufen eine geringe Anfälligkeit gegenüber Störungen aufweist. Im Stand der Technik bekannte Verfahren mit mehrstufigen Reaktorrohranordnungen, wie es beispielsweise in der PCT-Anmeldung WO 2008/080365 A1 beschrieben wird, gehen von einer seriellen Anordnung von Rohrreaktoren aus, und die Produktströme werden mittels Zwischenprobeentnahme abgeleitet. Das erfindungsgemäße Verfahren schließt diejenigen Störeinflüsse aus, die bei der Entnahme von Produktfluid aus den Verbindungsleitungen zwischen Reaktoren auftreten. Vorzugsweise ist das Verfahren für Rohrreaktoren von Bedeutung, bei denen der einzelne Rohrreaktor jeweils mit 0,1 - 100 g Katalysatormenge befüllt wurde, vorzugsweise ist die Katalysatormenge im Bereich von 0,5 - 80 g je Rohrreaktor.

Es ist festzustellen, dass sich das erfindungsgemäße Verfahren nicht auf diejenigen Prozesse bezieht, die im Pilotanlagenbetrieb und oder im Produktionsbetrieb durchgeführt werden, bei denen die Katalysatormenge pro Rohrreaktor beispielsweise > 1000 g beträgt. Bei dem erfindungsgemäßen Verfahren wird auf die Zwischenprobenentnahme verzichtet. Mittel des erfindungsgemäßen Verfahrens ist es möglich, die Information der Produktstromcharakterisierung durch parallel angeordnete Rohrreaktoren beziehungsweise Rohrreaktorgruppen zu simulieren, welche eine geringere Zahl an Prozessstufen aufweist als diejenige Rohrreaktorgruppe, die die Hauptrohrreaktorgruppe (der sogenannte Hauptstrang) des Reaktionssystems bildet. Den höheren Prozessstufen wird keinerlei Fluidlast entzogen, wie dies bei einer Entnahme aus der Verbindungsleitung der Fall wäre. Bei geringen Katalysatormengen, die in vorteilhafter Ausführung in Verbindung mit dem erfindungsgemäßen Verfahren eingesetzt werden, können beim Verzicht auf die Entnahme von Probenfluid wesentlich bessere Reaktionsbedingungen in Bezug auf Einhaltung von Reaktionsgleichgewichten erreicht werden. Die Störungen, die aus der Entnahme von Probenfluid aus den Verbindungsleitungen von seriell angeordneten Reaktoren resultieren können, können die Zeiten für die Equilibrierung beziehungsweise Re-Equilibrierung im Bereich von 0,25 - 480 Minuten verursachen. Davon unabhängig können auch Störungen des Reaktionsverhaltens bis hin zur reversiblen oder irreversiblen Schädigung des nachgeschalteten Katalysators verursacht werden, die vom Betreiber der Vorrichtung unbemerkt bleiben. Die Störungen stehen mit einer Verschiebung der Gleichgewichtslage in Verbindung, die nicht mehr in den alten Gleichgewichtszustand zurückfindet. Es handelt sich um systematische Störungen, die in der Praxis vom Betreiber unbemerkt bleiben und/oder dem Katalysator oder den gewählten Prozessbedingungen zugeordnet werden. Es war völlig unerwartet, dass mittels des CKP-Verfahrens eine Verbesserung der Genauigkeit und Präzision gegenüber dem im Stand der Technik bekannten Verfahren erreicht werden konnten. Die Verbesserungen ermöglichen es, dass reale Reaktionssysteme unter realen Testbedingungen besser untersucht werden können als es mit den Verfahren möglich ist, die im Stand der Technik bekannt sind. Somit kann auch der Maßstab der verwendeten Katalysatormengen mittels des erfindungsgemäßen Verfahrens im Vergleich zu Katalysatormengen, die in Pilotanlage verwendet werden, geringgehalten werden. Das erfindungsgemäße Verfahren betrifft den Einsatz von Katalysatormengen die geringer sind als 100 g pro Rohrreaktor. Bei Pilotanlagen liegt die eingesetzte Katalysatormenge im Bereich über 100 g. Aufgrund der verbesserten Datenqualität, die das erfindungsgemäße Verfahren unter Einsatz von geringen Katalysatormengen liefert, kann die Anzahl der Pilotanlagentests mit großen Katalysatormengen reduziert werden. Das erfindungsgemäße Verfahren ermöglicht es, Energie und Ressourcen einzusparen, da die verbesserte Qualität von Testdaten weniger Pilotanlagentests erforderlich macht.

In einer bevorzugten Ausführungsform ist das CKP-Verfahren dadurch gekennzeichnet, dass die zumindest zwei Reaktandenströme, die dem jeweiligen Reaktionssystem zugeführt werden, derartig gewählt werden, dass diese zumindest zwei Reaktandenströme in zumindest einer Mengenstromgröße aus der Gruppe Stoffmengenstrom, Volumenstrom oder Massenstrom übereinstimmen, vorzugsweise stimmen diese in zwei Mengenstromgrößen überein, weiter vorzugsweise stimmen diese in drei Mengenstromgrößen überein. Es ist von Bedeutung und von Vorteil, dass den parallel angeordneten Rohrreaktoren des Reaktionssystems genau die gleichen Mengen an Reaktanden zugeführt werden können, weshalb die in den Reaktorrohren befindlichen Katalysatoren äußerst genau vergleichbaren Bedingungen ausgesetzt werden. Das bedeutet, dass jedem Reaktionsstrang eines Reaktionssystems jeweils ein Reaktandenstrom zugeführt wird und es hierbei bevorzugt ist, dass diese Reaktandenströme eine Übereinstimmung aufweisen.

Weiter vorzugsweise ist das CKP-Verfahren dadurch gekennzeichnet, dass jeweils die Rohrreaktoren der ersten Reaktionsstufe eines Reaktionssystems mit einem Vorbehandlungskatalysator befüllt sind, vorzugsweise einem identischen Vorbehandlungskatalysator. Es ist festzuhalten, dass sich das Verfahren insbesondere auch zur Untersuchung von komplexen und mehrstufigen Prozessen eignet, bei denen mehrere Prozessstufen involviert sind.

In einer bevorzugten Ausführungsform ist das erfindungsgemäße Verfahren dadurch gekennzeichnet, dass die dem zumindest einem Reaktionssystem zugeführten Reaktandenströme ausgewählt sind aus der Gruppe Ergas - von der Beschaffenheit leicht mittel und/oder schwer, Erdöl, Naphtha, Benzin, Kerosin, Diesel, Mitteldestillate, Vakuumgasöl, atmosphärisches oder Vakuum-Rückstandsöl, Mineralöle, biostämmige Öle, Wasserstoff oder Synthesegas, und bei den mittels des Verfahrens durchgeführten Reaktionen handelt es sich um Reaktionen aus dem Raffineriebereich, der Petrochemie oder Synthesegaschemie. Die Reaktionen aus dem Raffineriebereich können ausgewählt sein aus der Gruppe Hydrierung, Krackprozesse, Isomerisierung, Entschwefelung, Entstickung, Dearomatisierung, Deoxygenierung, Demetallisierung, Dechlorinierung. Die Reaktionen aus der Petrochemie können ausgewählt sein aus der Gruppe Reformierung, Alkylierung, Transalkylierung, Hydrierung, Dehydrierung, Isomerisierung, milde Krackprozesse, Metathese, Oligomerisierung, Erdgas (C1-C4) zu Aromaten. Die Reaktionen der Syngaschemie können ausgewählt sein aus der Gruppe Fischer-Tropsch-Synthese, Methanol und Dimethylether(DME)-Synthese, Methanisierung, Synthese höherer Alkohole, Methanol zu Olefinen (MTO), Methanol zu Benzin (MTG), Methanol zu Aromaten (MTA).Eine bevorzugte Ausführungsform umfasst die Kombination von mehreren der oben genannten Reaktionstypen, beispielsweise die Kombination von Demetallisierung, Entschwefelung und Entstickung, Krackung von Vakuumgasölen zur Erzeugung von Petrochemikalien, Mineralölen und Kraftstoffen. Ein weiters Beispiel umfasst die Herstellung von Mineralölen aus Rückstandsölen mittel Demetallisierung, Entschwefelung und Entstickung, Krackung, Isomerisierung und finaler Hydrierung. In dieser bevorzugten Ausführungsform des CKP-Verfahrens werden die aufgeführten Prozesse voneinander getrennt in hintereinandergeschalteten Reaktoren bei unterschiedlichen Reaktionstemperaturen durchgeführt. Dies ermöglicht eine individuelle Temperaturkontrolle für jede einzelne Prozessstufe. Gleichzeitig wird den nachfolgenden Prozessstufen ein realistischer Reaktandenstrom aus der vorhergehenden Prozessstufe zudosiert, d.h. es entfällt die Bereitstellung bzw. Simulation von Zwischenströmen von der einen in die nächste Prozessstufe. Die Möglichkeit der Zudosierung eines zusätzlichen Reaktandenstroms vor jeder Prozessstufe verbessert die möglichst realitätsgetreue Abbildung der industriellen Prozessstufen. Der Vorteil des erfindungsgemässen Verfahrens liegt auch darin, dass die Produktströme der einzelnen Reaktorstufen der mehrstufigen Prozesse zeitgleich und störungsfrei erzeugt, analysiert und über Differenzbildung verglichen werden können. Vorzugsweise ist das Verfahren dadurch gekennzeichnet, dass die flüssigen Reaktanden mit einer LHSV im Bereich von 0,05 - 25 h⁻¹ , weiter vorzugsweise von 0,1 - 20 h⁻¹, und die Gase mit einer GHSV im Bereich von 10 - 75.000 h⁻¹ zugeführt werden, weiter vorzugsweise von 100 - 50.000 h⁻¹. Vorzugsweise erfolgt die Zuführung der Reaktandenströme zu den Rohrreaktoren eines Reaktionssystems über die gleiche Zuführungseinheit, wobei für die Zudosierung der Flüssigkeiten vorzugsweise Hochdruckpumpen eingesetzt werden. Erdgas kann in Form von leichtem, mittlerem oder schwerem Erdgas vorliegen. Im leichten Erdgas sind 5 Volumen-% höhere Kohlenwasserstoffe (C2 - C4) enthalten. Im mittelschweren Erdgas sind 10-12 Vol.-% höhere Kohlenwasserstoffe enthalten und im schweren Erdgas sind ca. 20-25 Vol.-% höhere Kohlenwasserstoffe enthalten.

Das Innenvolumen einer Verbindungsleitung ist um 50 % kleiner als das Innenvolumen des Rohrreaktors. In einer nicht erfindungsgemäßen Ausführungsform ist das Innenvolumen der Verbindungsleitung um 75 % kleiner als das Volumen des Rohrreaktors, alternativ ist das Innenvolumen der Verbindungsleitung um 90 % kleiner als das Innenvolumen des Rohrreaktors. Das Produktfluid und die Reaktandenfluide werden durch die Verbindungsleitungen geführt, ohne dass in den Verbindungsleitungen katalytische Reaktionen auftreten, das erfindungsgemäße Verfahren beeinträchtigen.

In einer Ausführungsform ist die Vorrichtung dadurch gekennzeichnet, dass die endständigen Rohrreaktoren jedes Reaktionssystems mit einer Druckhaltungsvorrichtung ausgestattet sind, vorzugsweise sind die endständigen Reaktoren jedes Reaktionssystems mit einer gemeinsamen Druckhaltungsvorrichtung ausgestattet, weiter vorzugweise sind die endständigen Reaktoren jedes Reaktionssystems mit einer Druckhaltungsvorrichtung und einer Druckregelungsvorrichtung ausgestattet.

Die Vorrichtung ist in einer weiteren Ausführungsform, die ebenso bevorzugt ist, dadurch gekennzeichnet, dass die einzelnen Verbindungsleitungen (02), durch welche die Rohrreaktoren einer Rohrreaktorgruppe verbunden sind, mit einer oder mehreren Temperierungseinheiten versehen sind, vorzugsweise werden die Verbindungsleitungen (02) bei der Temperatur geheizt, die der Temperatur des Rohrreaktors entspricht, der stromabwärts der Verbindungsleitung positioniert ist, vorzugsweise ist die Temperatur der Verbindungsleitungen (02) im Temperaturbereich von -25 - 900 °C, weiter vorzugsweise von 0 - 800 °C.

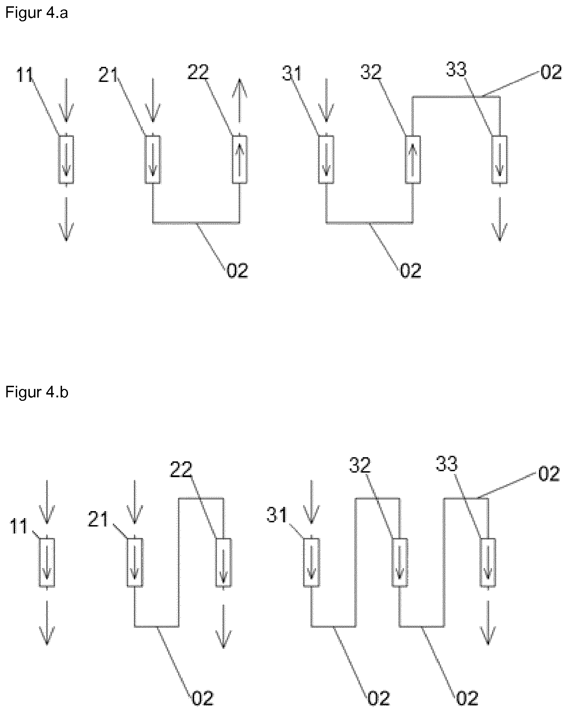

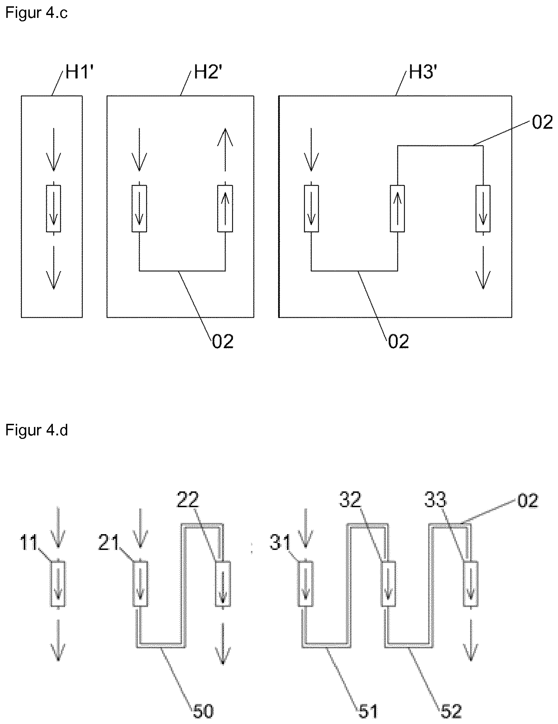

Durch die Verwendung von gewinkelten Verbindungsleitungen (02) können existierende Hochdurchsatzvorrichtungen umgerüstet werden, um mit diesen dann das erfindungsgemäße Verfahren durchzuführen. In existierenden Hochdurchsatzvorrichtungen sind bereits eine Vielzahl von Rohrreaktoren in einer parallelen Anordnung vorhanden. Anhand der schematischen Darstellungen in der Figur 4.a und 4.b ist zu sehen, dass die Strömungsrichtung des Reaktandenstroms in der Rohrreaktorgruppe entweder alterniert (wie in Figur 4.a gezeigt) oder einheitlich verläuft (wie in der Figur 4.b gezeigt). In der Figur 4.b verläuft der Reaktandenstrom bezüglich des Katalysatorbettes jeweils nach unten fließend beziehungsweise fallend. Die Ausführungsform mit dem nach unten durchströmten Betten ist bevorzugt.

Die Vorrichtung ist dadurch gekennzeichnet ist, dass die Verbindungsleitungen (02), welche die Rohrreaktoren der Rohrreaktorgruppen verbinden, keine Wirkverbindung mit Schaltventilen aufweisen, durch die Fluidströme abgeleitet werden. Fluidstromentnahme führt zu einer Störung des Reaktionsverhaltens in den nachfolgenden Reaktionsstufen und kann eine irreversible Schädigung der nachfolgenden Katalysatoren verursachen. Druckstöße, verursacht durch die Probennahme, können auch das Reaktionsverhalten in der vorherigen Reaktionsstufe beeinträchtigen. In einer weiteren Ausführungsform kann die Vorrichtung eine Wirkverbindung mit Schaltventilen aufweisen, durch die Fluidströme der nachfolgenden Reaktionsstufe zugeführt werden können. Die Fluidzugabe kann notwendig sein für den Fall, dass die nachfolgenden Reaktionsstufen weitere Reaktanden für den Reaktionsablauf benötigen, die in der vorhergehenden Reaktionsstufe nicht benötigt werden bzw. den Reaktionsablauf stören. Des Weiteren kann damit die Stoffströme eines oder mehrerer Reaktanden im Reaktandenstrom individuell für jede Reaktionsstufe angepasst werden. Beispielsweise wird der Wasserstoffstrom bei kombinierten Hydrier- und Krackreaktionen individuell auf die Reaktionsstufe angepasst, um bestimmte GHSV-Bedingungen einzustellen bzw. um in der vorhergehenden Reaktionsstufe verbrauchten Wasserstoff nachzudosieren und einen Mangel an Wasserstoff zu vermeiden. Die Zahl der zwischen den Reaktionsstufen zusätzlich zudosierten Reaktandenströme hat einen Einfluss auf die Komplexität des erfindungsgemäßen Verfahrens.

Es ist bevorzugt, dass die Vorrichtung mit Mitteln der Datentechnik gesteuert wird und das Verfahren vollautomatisch durchgeführt wird.

### Kurze Beschreibung der Figuren

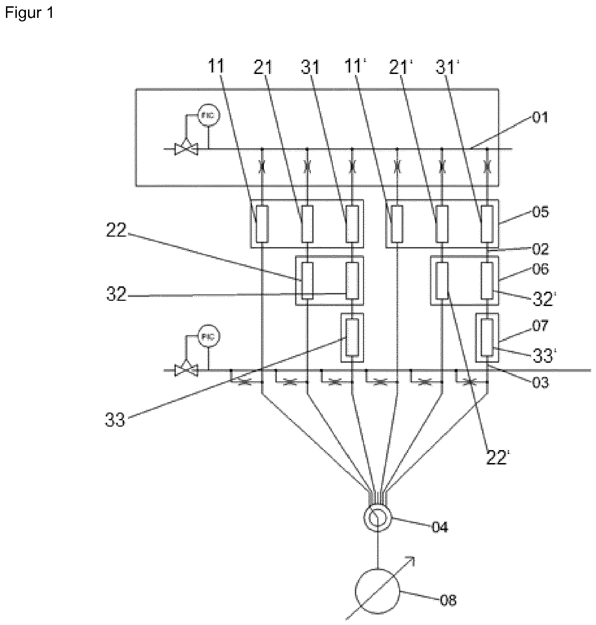

- Figur 1: zeigt eine schematische Darstellung einer Vorrichtung, die mit zwei Reaktionssystemen ausgestattet ist, wobei jedes Reaktionssystem für drei Prozessstufen ausgelegt ist und drei Reaktionsstränge aufweist. Jedes Reaktionssystem weist jeweils eine Heizvorrichtung pro Prozessstufe auf.

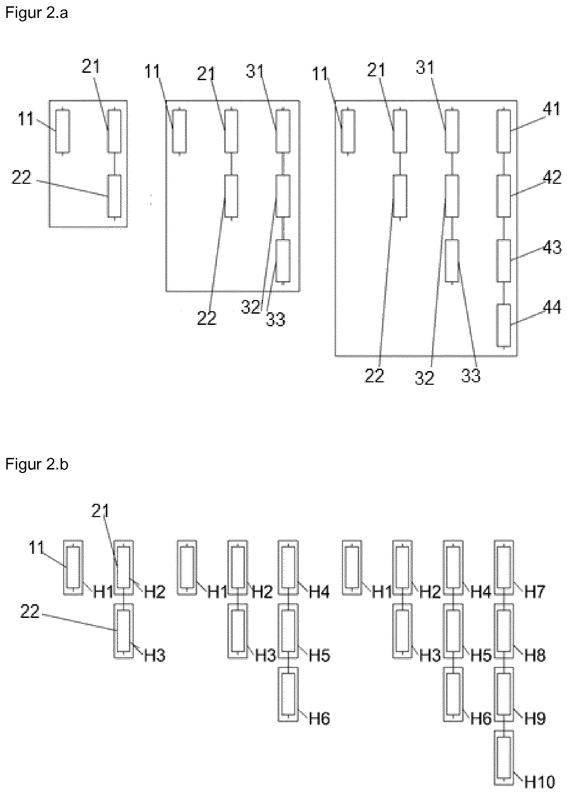

- Figur 2.a: zeigt schematische Darstellung von drei Reaktionssystemen, die in Form von zweistufigem, dreistufigem und vierstufigem Reaktionssystem vorliegen, wobei das zweistufige Reaktionssystem mit zwei Reaktionssträngen ausgestattet, das dreistufigen Reaktionssystem mit drei Reaktionssträngen und das vierstufige Reaktionssystem mit vier Reaktionssträngen ausgestaltet ist.
- Figur 2.b: zeigt schematische Darstellung der drei Reaktionssystem, die in Figur 2.a gezeigt werden, wobei jeder einzelne Rohrreaktor mit einer Einzelbeheizung zur separaten Beheizung des jeweiligen Rohrreaktors versehen ist.

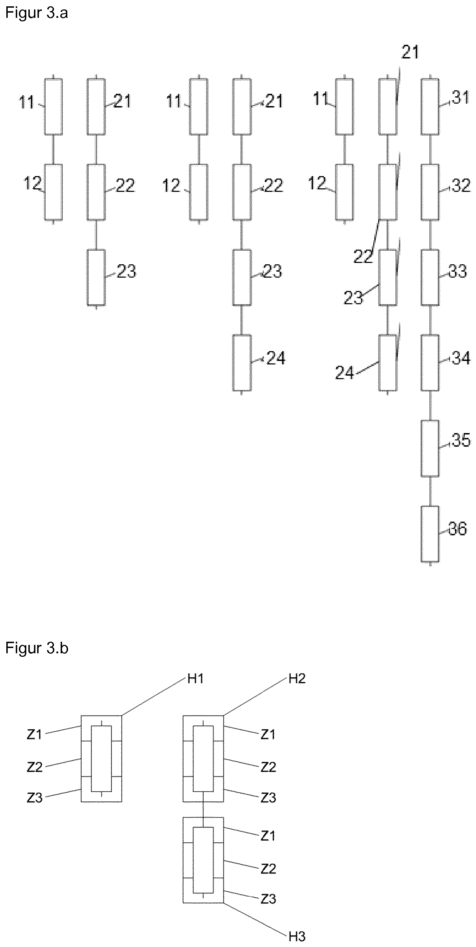

- Figur 3.a: zeigt eine schematische Darstellung von drei Reaktionssystemen, und zwar in Form von dreistufigen, vierstufigen und sechsstufigen Anordnung. Das dreistufige Reaktionssystem und das vierstufige Reaktionssystem weisen zwei Reaktionsstränge und das sechsstufige Reaktionssystem weist drei Reaktionsstränge auf; jeder einzelne Reaktionsstrang wird aus einer seriellen Anordnung von Rohrreaktoren gebildet.
- Figur 3.b: zeigt eine schematische Darstellung von einem zweistufigen Reaktionssystem, bei dem jeder einzelne Rohrreaktor mit einer Mehrzonenbeheizung ausgestattet ist. In der Darstellung sind jeweils drei Zonen Z1, Z2 und Z3 pro Rohrreaktor eingezeichnet. Die Anzahl der Heizungszonen kann auch größer oder kleiner als drei sein.
- Figur 4.a: zeigt die schematische Darstellung eines dreistufigen Reaktionssystems, bei dem die einzelnen Rohrreaktorgruppen dadurch gekennzeichnet sind, dass die Rohrreaktoren der gleichen Gruppe nebeneinander in einer horizontalen Ebene angeordnet sind. Die Rohrreaktoren eines Reaktionsstrangs stehen durch gewinkelte beziehungsweise gekrümmte Verbindungselemente (02) in Wirkverbindung. Hierbei werden die Rohrreaktoren der ersten Stufe stromabwärts, die der zweiten Stufe stromaufwärts und die der dritten Stufe stromabwärts durchströmt.
- Figur 4.b: zeigt eine schematische Darstellung eines dreistufigen Reaktionssystems, bei dem alle Rohrreaktoren in stromabwärts laufenden Weise durchströmt werden. Die Verbindungsleitungen (02) sind dabei so ausgestaltet, dass diese den Fluidstrom vom unteren Ausgang des ersten Rohrreaktors zum oberen Eingang des benachbarten Rohrreaktors transportieren. Auf diese Weise werden die seriell geschalteten Reaktoren jeweils stromabwärts von oben nach unten durchströmt. In den seriell verbundenen Reaktoren, die in Figur 4.a dargestellt sind, verläuft die Fluidströmung in benachbarten Reaktoren in unterschiedliche Richtungen.
- Figur 4.c: zeigt die schematische Darstellung eines dreistufigen Reaktionssystems in einer Darstellung, die der Darstellung von Figur 4.a entspricht, wobei die Rohrreaktoren jedes Reaktionsstrangs jeweils mit einer eigenen Beheizungsvorrichtung ausgestattet sind. Ebenso wie in der Figur 4.a werden die Rohrreaktoren der ersten Stufe stromabwärts, die der zweiten Stufe stromaufwärts und die der dritten Stufe stromabwärts durchströmt.
- Figur 4.d: zeigt eine schematische Darstellung eines dreistufigen Reaktionssystems, bei dem alle Rohrreaktoren stromabwärts durchströmt werden. Die Darstellung entspricht der Darstellung in Figur 4.b, wobei die Verbindungsleitungen in den Reaktionssträngen, durch die die benachbarten Rohrreaktoren verbunden sind, jeweils eine separate Beheizungsvorrichtung aufweisen.

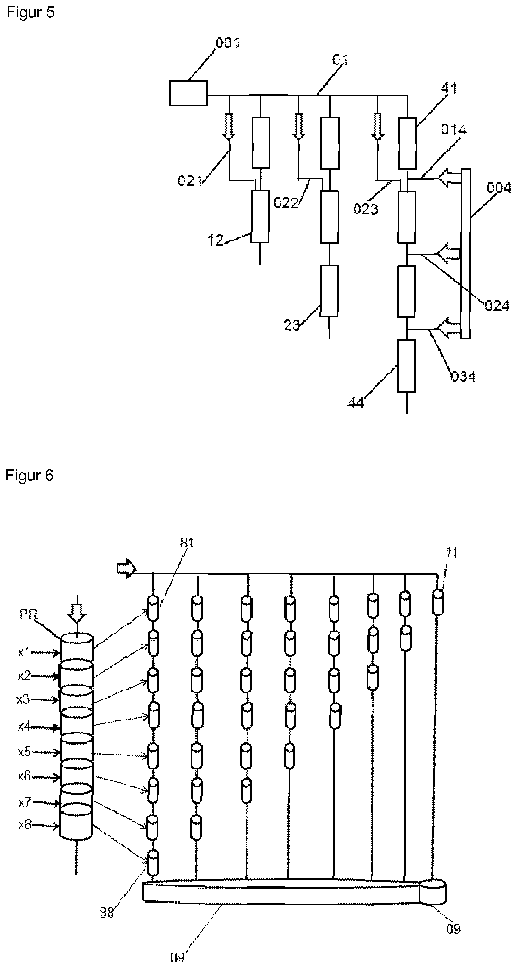

- Figur 5: zeigt die schematische Darstellung eines vierstufigen Reaktionssystems, das mit drei Reaktionssträngen ausgestattet ist, wobei die jeweils die Reaktoren der zweiten Prozessstufe mit den Zuführungen (021), (022), (023) für Reaktandenfluid verbunden sind. Darüber hinaus sind die Reaktoren (42), (43), (44) des dritten Reaktionsstrangs mit Wasserstoffzuführungen (014), (024), (034) ausgestattet. Nicht eingezeichnet sind Wasserstoffzuführungen zu den Reaktoren des zweiten und des ersten Reaktionsstrangs.
- Figur 6: zeigt die schematische Darstellung eines technischen Pilotreaktors (PR), dessen Längsachse in acht Reaktionszonen x1 - x8 gegliedert wurde, und den Versuchsaufbau, um den Prozess des Pilotreaktors (PR) mittels eines Reaktionssystems zu simulieren beziehungsweise nachzustellen, welches mit acht Prozessstufen und acht Reaktionssträngen ausgestaltet ist.

Die in den Figuren dargestellten Anordnungen der Reaktionssysteme können zur Durchführung des erfindungsgemäßen Verfahrens in den jeweiligen Ausführungsformen eingesetzt werden.

### Ausführliche Beschreibung der Figuren

In Figur 1 wird eine schematische Darstellung einer Vorrichtung gezeigt, die mit zwei Reaktionssystemen ausgestattet sind, die zur Durchführung von dreistufigen Prozessen vorgesehen sind. Somit ist A_{PS} = 3.Jedes Reaktionssystem weist drei Reaktionsstränge auf. Somit ist nS = 3. In dem zweiten Reaktionssystem wurden die Rohrreaktoren in der entsprechenden Weise mit einem Strich gekennzeichnet. Jedes Reaktionssystem weist drei Beheizungsvorrichtungen auf, wobei mit der Beheizungsvorrichtung (05) die drei Reaktoren (1 1'), (22') und (31') der ersten Stufe beheizt werden. Mit der Beheizungsvorrichtung (06) werden die zwei Reaktoren (22'), (32') der zweiten Stufe und mit der Beheizungsvorrichtung (07) der Reaktor (33') der dritten Stufe beheizt. Möglich wäre auch, dass die die Beheizungsvorrichtung (05) auch zur Beheizung der Reaktoren (11), (22) und (33) verwendet wird. Die endständigen Rohrreaktoren (d.h. die Rohrreaktoren (11), (22) und (33) beziehungsweise die Rohrreaktoren (11'), (22') und (33')) der beiden Reaktionssysteme sind jeweils über Ausgangsleitungen mit dem Ventil (04) verbunden. Exemplarisch eingezeichnet wurde das Bezugszeichen (02) für die Verbindungsleitung zwischen einzelnen Rohrreaktoren (31') und (33'). Es ist bevorzugt, dass die Verbindungsleitungen (d.h. die Leitungen, die mit dem Bezugszeichen (02) gekennzeichnet sind oder die Leitungen zwischen benachbarten Reaktoren, die keine Kennzeichnung aufweisen auch beheizt werden.

Vorzugsweise werden die im Produktstrom enthaltenen flüssigen Produkte und gasförmigen Produkte vor der analytischen Charakterisierung getrennt und jeweils separaten Charakterisierungen unterzogen. Nicht in die Figur 1 eingezeichnet sind Probensammelgefäße zur Abscheidung von flüssigen Proben, die jedem einzelnen endständigen Rohrreaktor nachgeschaltet sein können. Die Probensammelgefäße sind vorzugsweise in der Verbindungsleitung zwischen Reaktorausgang und dem Multiportventil (04) angeordnet. Die Größe der Probensammelgefäße hängt von dem jeweils durchgeführten Verfahren, den Verfahrensbedingungen und der Reaktorgröße ab. Vorzugsweise liegt da Innenvolumen der einzelnen Probensammelgefäße im Bereich von 25 mL - 1000 mL, weiter vorzugsweise im Bereich von 50 mL - 250 mL. Die Befüllung der Probensammelgefäße kann mittels Zeitsteuerung oder mittels Füllstandsensor kontrolliert werden. Es werden in definierten Zyklen flüssige Proben zu Analyse entnommen. Vorzugsweise wird der Inhalt der Probensammelgefäße in zyklischer Weise entleert, so dass die pro Zeiteinheit gesammelten Probenmengen charakteristisch sind für die Produktstromzusammensetzung, die in dem gewählten Zeitabschnitt aufgesammelt wurde. Mittels der kumulativen Probennahme über geringe Zeitabstände lassen sich Rückschlüsse über die differentiellen Veränderungen des katalytischen Verfahrens treffen. Unter geringen Zeitabständen ist zu verstehen, dass die Entleerung und Analyse des jeweils betrachteten Probensammelgefäßes jeweils im Zeitabstand von 0,25 - 20 Stunden durchgeführt wird, vorzugsweise wird die Analyse der flüssigen Probe des jeweiligen Probengefäßes im Zeitabstand von 0,5 - 10 Stunden durchgeführt. Es ist hierbei auch hervorzuheben, dass die Probennahme bei denjenigen katalytischen Verfahren, die sowohl flüssige als auch gasförmige Produkte im Produktstrom aufweisen, extrem schwierig und störanfällig ist. Durch das erfindungsgemäße Verfahren unter Verwendung der parallelen Anordnung von Rohrreaktorgruppen beziehungsweise Reaktionssträngen mit abgestufter Anzahl von Rohrreaktoren wird das Problem der Störanfälligkeit gelöst, die bei der Zwischenprobenentnahme auftritt. Dadurch kann die Genauigkeit der Untersuchung verbessert werden. Die verbesserte Genauigkeit kann auch dazu genutzt werden, den Verfahrensmaßstab zu verkleinern, wobei trotz der Verkleinerung des Maßstabs eine hohe Genauigkeit gewährleistet wird.

Bei dem Multiportventil (04) handelt es sich um ein Auswahlventil, mittels dem bestimmte Ausgangsleitungen und Produktströme auf die Analysenleitung geführt werden können, die mit Instrumenten für eine Durchführung von online analytischen Charakterisierungen verbunden ist. Bei den Instrumenten kann es sich um einen oder mehrere Gaschromatographen handeln, die mit MS-Detektor, FID, AAS ausgerüstet sind. Diejenigen Fluidströme, die nicht der Auswahlleitung für die Charakterisierung zugeführt werden, lassen sich über eine gemeinsame Ableitung aus der Vorrichtung ableiten.

Das in der Figur 2.a gezeigte Schema zeigt drei unterschiedliche Reaktionssysteme, die jeweils zwei, drei und vier Reaktionsstränge umfassen. Somit dienen die dargestellten Reaktionssysteme zur Durchführung eines zweistufigen Verfahrens mittels der Zweianordnung, zur Durchführung eines dreistufigen Verfahrens mittels der Dreieranordnung und zur Durchführung eines vierstufigen Verfahrens mittels der Viereranordnung. Gemäß der Figur 2.b ist zu erkennen, dass jeder einzelne Rohrreaktor mit einer Einzelbeheizung (H1, H2, H3,...) ausgestattet sein kann. Bevorzugt ist eine Ausführungsform, bei der die Rohrreaktoren der gleichen Prozessstufe mittels des gleichen Beheizungssystems temperiert werden wie dies in Figur 1 für das Beheizungselement (05) dargestellt ist. Somit können die Reaktoren der einzelnen Prozessstufen wahlweise mit einer Einzelbeheizung oder mit je einer Sammelbeheizung für die jeweilige Prozessstufe ausgestattet sein.

Der Figur 3.a ist gezeigt, dass die Reaktionssysteme auch aus einer speziellen Auswahl von Rohrreaktorgruppen aufgebaut sein können. Beispielsweise ist auf der linken Seite in der Figur 3.a ein Reaktionssystem zur Durchführung eines dreistufigen Prozesses gezeigt, das mit zwei Reaktionssträngen ausgestattet ist. In der Mitte ist ein Reaktionssystem zur Durchführung eines vierstufigen Prozesses mit zwei Reaktionssträngen gezeigt. Auf der rechten Seite ist ein Reaktionssystem für die Durchführung eines sechsstufen Prozesses gezeigt, das mit drei Reaktionssträngen versehen ist, welche mit zwei, vier und sechs seriell verbundenen Rohrreaktoren ausgestattet sind.

In der Figur 3.b sind drei Rohrreaktoren gezeigt, die eine parallele Anordnung von einem Rohrreaktor und einer Rohrreaktorgruppe bilden und die jeweils mit speziellen Beheizungseinheiten ausgestattet sind, die eine Mehrzonenbeheizung der Reaktoren ermöglichen.

In der Figur 4.a ist der schematische Aufbau eines Reaktionssystems für drei Prozessstufen dargestellt, wobei die Rohrreaktoren parallel angeordnet sind und die Rohrreaktoren einer Gruppe durch gewinkelte beziehungsweise gekrümmte Verbindungsleitungen (02) in Wirkverbindung stehen. Die Rohrreaktoren der ersten Stufe werden stromabwärts, die der zweiten Stufe stromaufwärts und die der dritten Stufe stromabwärts durchströmt.

In der Figur 4.b ist eine schematische Darstellung eines dreistufigen Reaktionssystems dargestellt, bei dem alle Rohrreaktoren in stromabwärts laufende Weise durchströmt werden. Die Verbindungsleitungen (02) sind dabei so ausgestaltet, dass diese den Fluidstrom vom unteren Ausgang des ersten Rohrreaktors (beispielsweise von Rohrreaktor (21)) zum oberen Eingang des benachbarten Reaktors (d.h. zum Rohrreaktor (22)) führen und es dadurch ermöglichen, dass benachbarte Reaktoren (d.h. die Reaktoren (21) und (22) oder auch die Reaktoren (31), (32) und (33) stromabwärts durchströmt werden.

In der Figur 4.c ist die schematische Darstellung eines dreistufigen Reaktionssystems in einer Darstellung gezeigt, die der Darstellung von Figur 4.a entspricht, wobei die Rohrreaktorgruppen der einzelnen Reaktionsstränge jeweils eine separate Beheizungsvorrichtung aufweisen. Ebenso wie in der Figur 4.a werden die Rohrreaktoren der ersten Stufe stromabwärts, die der zweiten Stufe stromaufwärts und die der dritten Stufe stromabwärts durchströmt.

In der Figur 4.d ist eine schematische Darstellung eines dreistufigen Reaktionssystems dargestellt, bei dem alle Rohrreaktoren stromabwärts durchströmt werden. Die Darstellung entspricht der Darstellung in Figur 4.b, wobei die Rohrreaktorgruppen, der einzelne Rohrreaktor also auch die Verbindungsleitungen jeweils eine separate Beheizungsvorrichtung aufweisen.

Eine weitere bevorzugte Ausführungsform des erfindungsgemäßen Verfahrens ist in Figur 5 dargestellt, die dadurch gekennzeichnet ist, dass den Reaktoren der zweiten Prozessstufe jeweils frisches Reaktandenfluid zugeführt wird. Darüber hinaus wird den Reaktoren der zweiten, dritten und vierten Prozessstufe des vierten Reaktionsstrangs auch noch Wasserstoff über die Zuführungseinheit (004) und Wasserstoffzuführungen (014), (024), (034) zugeführt. Die Wasserstoffzuführungen (014), (024), (034) sind mit den Verbindungsleitungen verbunden, die die seriell angeordneten Reaktoren verbinden. Nicht eingezeichnet wurden die Wasserstoffzuführungen zu den anderen Reaktoren der höheren Prozessstufen, die vorzugsweise auch vorhanden sind. Dadurch dass nämlich die Rohrreaktoren der höheren Prozessstufen den identischen Reaktionsbedingungen unterzogen werden, können die Bedingungen in den parallel angeordneten Reaktionssträngen einer hochpräzisen Kontrolle unterzogen werden, die zur Datenqualität beiträgt. Eine Probenentnahme, zwischen den einzelnen seriell verknüpften Rohrreaktoren ist hierbei nicht vorgesehen.

In der Figur 6 ist eine Gegenüberstellung von einem Pilotreaktor (PR) und einem Reaktionssystem mit acht Prozessstufen gezeigt, um zu illustrieren, wie mittels einer bevorzugten Ausführungsform des erfindungsgemäßen Verfahrens ein Pilotreaktor (PR) nachgestellt wird. In der konkreten Ausgestaltung mit den acht Prozessstufen und acht Reaktionssträngen werden 36 Reaktoren verwendet. In dem Beispiel ist jeder einzelne Reaktor mit 5 Gramm Katalysatormaterial befüllt. Somit werden insgesamt 90 Gramm Katalysatormaterial eingesetzt, um den technischen Prozess nachzustellen, der innerhalb des Pilotreaktors (PR) mit einer wesentlich größeren Katalysatormenge, und zwar im Bereich von 10 - 500 kg, durchgeführt wird. Nicht in der Figur 6 eingezeichnet ist, dass die einzelnen Reaktionsstufen der Reaktionsstränge auf unterschiedlichen Temperaturen geheizt werden können.

Es ist anzumerken, dass eine Umrüstung von existierenden Hochdurchsatzapparaturen möglich ist, um diese zur Durchführung des CKP-Verfahrens einzusetzen. Die Umrüstung kann in der Weise durchgeführt werden, dass die existierende Hochdurchsatzapparatur so umgerüstet wird, dass ein Reaktionssystem mit einer großen Anzahl von Prozessstufen darin integriert wird, oder dass mehrere Reaktionssysteme mit einer geringeren Anzahl von Prozessstufen darin integriert werden. Die Möglichkeiten resultieren aus dem Aufbau der existierenden Hochdurchsatzapparaturen, der Anzahl von Einsteckpositionen für Rohrreaktoren sowie die Auslegung der existierenden Apparatur, insbesondere in Bezug auf die Temperierungseinheiten und die Bauelemente zur Zuführung der Reaktandenströme.

Was die Hochdurchsatzforschung betrifft, so bietet das CKP-Verfahren eine hohe Flexibilität, die dazu führt, dass das CKP-Verfahren in Multifunktionsvorrichtungen integriert werden kann. Mittels der Multifunktionsvorrichtungen ist es wahlweise möglich, sowohl ein Standard-Screening-Verfahren als auch ein CKP-Verfahren durchzuführen.

Eine weitere Ausführungsform ist dadurch gegeben, dass die Hochdurchsatzvorrichtung in einer modularen Form angeboten, bei dem die einzelnen Module der Vorrichtung in Form von Steckverbindungen miteinander gekoppelt werden. Auf der Basis der Zusammenfügung von Vorrichtungsmodulen ist es möglich, die Vorrichtung so auszugestalten, dass diese zur gleichzeitigen Durchführung eines oder mehrerer CKP-Verfahren und zur Durchführung von Screening-Verfahren eignet.

### Bezugszeichenliste

- 01: - Zuführung für Reaktandenstrom
- 02: - Verbindungsleitung zwischen zwei Rohrreaktoren beziehungsweise Reaktionsräumen
- 03: - reaktionsraumausgangsseitige Leitung
- 04: - Multiportventil mit sechs Zuleitungen, Auswahlleitung und gemeinsame Ableitung sind nicht einzeichnet
- 05: - Beheizungsvorrichtungen für die erste Stufe
- 06: - Beheizungsvorrichtungen für die zweite Stufe
- 07: - Beheizungsvorrichtungen für die dritte Stufe
- 08: - Druckregler?
- 09: - Analyseneinheit für eine Mehrzahl von Produktfluiden
- 09': - Analyseneinheit für ein einzelnes Produktfluid
- 001: - Reaktandenzufuhr
- 021: - Zuführung von Reaktandenstrom zum Reaktor (21)
- 022: - Zuführung von Reaktandenstrom zum Reaktor (32)
- 023: - Zuführung von Reaktandenstrom zum Reaktor (42)
- 004: - Zuführungseinheit für Wasserstoff
- 014: - Wasserstoffzuführung zum Reaktor (42)
- 024: - Wasserstoffzuführung zum Reaktor (43)
- 034: - Wasserstoffzuführung zum Reaktor (44)
- PR: - Pilotreaktor
- x1 - x8: - acht Reaktionszonen entlang der Längsachse des Pilotreaktors
- 551: Einschub für Reaktor(en), der mit Einzelheizern ausgestattet ist
- 552 - 558: Einschübe für Reaktor(en), die mit Einzelheizern ausgestattet sind
- H1, H2, H3,...: - Einzelbeheizung für Rohrreaktor beziehungsweise Reaktionsraum
- Z1, Z2, Z3: - Heizzonen zur Beheizung der Bereiche von einzelnen Rohrreaktoren
- zweistellige Nummer: - Nummer auf der rechten Seite kennzeichnet die Nummer des Reaktors in der jeweiligen Prozessstufe. Die Nummer auf der linken Seite kennzeichnet die Nummer des Reaktionsstrangs. Zählweise erfolgt in der Weise, dass der Reaktionsstrang mit der geringsten Anzahl von Rohrreaktoren die Nummer 1 erhält und dann aufwärts gezählt wird.
- YZ': - zweistellige Nummer mit Hochstrich kennzeichnet ein parallel angeordnetes Reaktionssystem

## Patentansprüche

1. Verfahren zur Charakterisierung von katalytischen Prozessen, nachfolgend CKP-Verfahren genannt, in einem Reaktionssystem mit zwei oder mehr parallel angeordneten Reaktionssträngen, die eine unterschiedliche Anzahl von Rohrreaktoren aufweisen und wobei ein einzelner Reaktionsstrang mehrere seriell verbundenen Rohrreaktoren oder einen einzelnen Rohrreaktor umfasst, wobei Verbindungsleitungen zwischen den Rohrreaktoren keine Verbindungsleitungen mit Schaltventilen aufweisen oder die Verbindungsleitungen zwischen den Rohrreaktoren nur mit Schaltventilen ausgestattet sind, bei denen es sich um Zuführungselemente handelt, und auf die Zwischenprobenentnahme verzichtet wird, und wobei die Verbindungsleitungen ein Innenvolumen aufweisen, das um 50 % kleiner ist als das Innenvolumen des Rohrreaktors und wobei das Verfahren nachfolgende Schritte umfasst:
i) die einzelnen Rohrreaktoren der Reaktionsstränge mit Katalysatormaterial befüllt werden,
ii) jedem Reaktionsstrang jeweils ein Reaktandenstrom zugeführt wird, wobei die Reaktandenströme jeweils die gleiche chemische Zusammensetzung aufweisen,
iii) die den Reaktionssträngen zugeführten Reaktandenströme in den unterschiedlichen Reaktionssträngen unterschiedlichen Anzahl von Prozessstufen unterzogen werden, wobei eine einzelne Prozessstufe entweder einen Reaktionstyp und/oder einen Umsatzgrad einer gegebenen Reaktion umfasst,
iv) die aus den parallel angeordneten Reaktionssträngen ausgeleiteten Produktströme werden einer analytischen Charakterisierung unterzogen,
v) die bei der analytischen Charakterisierung der Produktströme aus den unterschiedlichen Reaktionssträngen erzielten Daten werden in eine Beziehung gesetzt.

2. CKP-Verfahren nach Anspruch 1, das **dadurch gekennzeichnet ist,**
**dass** zwei oder mehr Reaktionssysteme umfasst sind und die Schritte i) - v) beziehungsweise die Schritte ii) - v) in den zwei oder mehr Reaktionssystemen gleichzeitig durchgeführt werden.

3. CKP-Verfahren nach Anspruch 1 oder Anspruch 2, das **dadurch gekennzeichnet ist, dass** der Schritt ii) **dadurch gekennzeichnet ist, dass** die einzelnen Reaktandenströme, die dem jeweils ersten Reaktionsraum jedes einzelnen Reaktionsstrangs innerhalb eines Reaktionssystems zugeführt werde, die gleiche chemische Zusammensetzung aufweisen und/oder wobei die einzelnen Reaktandenströme in zumindest einer Mengenstromgröße aus der Gruppe Stoffmengenstrom, Volumenstrom, Massenstrom übereinstimmen.

4. CKP-Verfahren nach einem der Ansprüche 1 - 3, das **dadurch gekennzeichnet ist, dass** die Anzahl der Prozessstufen A_{PS} im Bereich von 2 - 40 und/oder die Anzahl der gleichzeitig durchgeführten CKP-Verfahren im Bereich von 2 - 20 liegt.

5. CKP-Verfahren einem der Ansprüche 1 - 4, das **dadurch gekennzeichnet ist, dass** der Schritt iii) weiterhin **dadurch gekennzeichnet ist, dass** den nachgeordneten Reaktionsräumen der einzelnen Reaktionsstränge innerhalb eines Reaktionssystems zusätzlich Reaktandenstrom zugeführt wird, und zwar jedem nachgeordneten Reaktionsraum jeweils die gleiche Zusammensetzung und die gleiche Menge.

6. CKP-Verfahren nach einem der Ansprüche 1 - 5, das **dadurch gekennzeichnet ist, dass** die Reaktionsräume unterschiedlicher Prozessstufen eines Reaktionssystems bei unterschiedlichen Temperaturen und gleiche Prozessstufen eines Reaktionssystems bei der gleichen Temperatur gelagert, wobei die Temperatur im Bereich von -25 bis 900 °C liegt.

7. CKP-Verfahren nach einem der Ansprüche 1 - 6, das **dadurch gekennzeichnet ist, dass** die Reaktionsräume als Rohrreaktoren ausgestaltet sind, deren Innendurchmesser im Bereich von 2 - 50 mm und deren Länge im Bereich von 5 - 150 cm liegen.

8. CKP-Verfahren nach einem der Ansprüche oder einem der Ansprüche 10 - 11 das **dadurch gekennzeichnet ist, dass** die Rohrreaktoren der gleichen Prozessstufe eines Reaktionssystems jeweils die gleichen Katalysatoren enthalten.

9. CKP-Verfahren nach einem der Ansprüche 1 - 8, das **dadurch gekennzeichnet ist, dass** die Rohrreaktoren der gleichen Prozessstufe eines Reaktionssystems jeweils die gleichen Katalysatoren enthalten, die gleichen Mengen an Katalysator, vorzugsweise liegen die Katalysatoren in Partikelform vor und der Partikeldurchmesser ist im Bereich von 1 - 10.000 µm und/oder wobei die Katalysatoren mit Inertmaterial verdünnt sind und wobei die Katalysatoren einer Prozessstufe den gleichen Verdünnungsgrad mit Inertmaterial enthalten, der durch ein Massenverhältnis von Katalysator-zu-Inertmaterial im Bereich von 0,01 : 100 bis 100 : 1 gekennzeichnet ist.

10. CKP-Verfahren nach einem der Ansprüche 1 - 9, das **dadurch gekennzeichnet ist, dass** die Zusammensetzung der Produktströme analysiert wird und das Ergebnis der Analyse der unterschiedlichen Produktströme in Beziehung gesetzt wird, die eine Differenzbildung umfasst, wobei die Massenbilanzierung durch eine Standardabweichung von +/- 10 Gew.-% gekennzeichnet ist.

11. CKP-Verfahren nach einem der Ansprüche 1 - 10, das **dadurch gekennzeichnet ist, dass** die dem zumindest einem Reaktionssystem zugeführten Reaktandenströme ausgewählt sind aus der Gruppe Erdgas - in Form von leichtem, mittelleichtem oder schwerem Erdgas - Erdöl, Naphtha, Benzin, Kerosin, Diesel, Mitteldestillate, Vakuumgasöl, atmosphärisches oder Vakuum-Rückstandsöl, Mineralöle, biostämmige Öle, Wasserstoff oder Synthesegas, und bei den mittels des Verfahrens durchgeführten Reaktionen handelt es sich um Reaktionen aus dem Raffineriebereich, der Petrochemie oder Synthesegaschemie.

12. CKP-Verfahren nach einem der Ansprüche 1 - 11, das **dadurch gekennzeichnet ist, dass** das Verfahren bei einem Druck im Bereich von 1 - 500 bara durchgeführt, wobei die die flüssigen Reaktanden mit einer LHSV im Bereich von 0,05 - 20 h⁻¹ und die Gase mit einer GHSV im Bereich von 10 - 50.000 h⁻¹ zugeführt werden.

## Claims

1. Method for the characterization of catalytic processes, hereinafter referred to as CKP method, in a reaction system having two or more reaction strands arranged in parallel, which have a different number of tubular reactors, and wherein a single reaction strand comprises a plurality of tubular reactors connected in series or a single tubular reactor, wherein connecting lines between the tubular reactors have no connecting lines with switching valves, or the connecting lines between the tubular reactors are equipped only with switching valves which are feed elements, and intermediate sampling is dispensed with, and wherein the connecting lines have an internal volume that is 50% smaller than the internal volume of the tubular reactor, and wherein the method comprises the following steps:
i) the individual tubular reactors of the reaction strands are filled with catalyst material,
ii) each reaction strand is supplied with a respective reactant stream, wherein the reactant streams each have the same chemical composition,
iii) the reactant streams supplied to the reaction strands are subjected to a different number of process stages in the different reaction strands, wherein a single process stage comprises either a reaction type and/or a degree of conversion of a given reaction,
iv) the product streams discharged from the parallel-arranged reaction strands are subjected to analytical characterization,
v) the data obtained during the analytical characterization of the product streams from the different reaction strands are correlated.

2. CKP method according to Claim 1, **characterized in that**
two or more reaction systems are comprised and steps i) - v) or steps ii) - v) are carried out simultaneously in the two or more reaction systems.

3. CKP method according to Claim 1 or Claim 2, **characterized in that** step ii) is **characterized in that** the individual reactant streams supplied to the respective first reaction space of each individual reaction strand within a reaction system have the same chemical composition and/or wherein the individual reactant streams agree in at least one flow quantity from the group consisting of molar flow, volumetric flow, and mass flow.

4. CKP method according to any one of Claims 1 to 3, **characterized in that** the number of process stages A_{PS} is in the range of 2 to 40 and/or the number of simultaneously performed CKP methods is in the range of 2 to 20.

5. CKP method according to any one of Claims 1 to 4, **characterized in that** step iii) is further **characterized in that** the downstream reaction spaces of the individual reaction strands within a reaction system are additionally supplied with reactant stream, specifically each downstream reaction space being supplied with the same composition and the same quantity.

6. CKP method according to any one of Claims 1 to 5, **characterized in that** the reaction spaces of different process stages of a reaction system are maintained at different temperatures and reaction spaces of identical process stages of a reaction system are maintained at the same temperature, wherein the temperature is in the range of -25 to 900 ° C.

7. CKP method according to any one of Claims 1 to 6, **characterized in that** the reaction spaces are configured as tubular reactors whose inner diameter is in the range of 2 to 50 mm and whose length is in the range of 5 to 150 cm.

8. CKP method according to any one of the claims or any one of Claims 10 to 11, **characterized in that** the tubular reactors of the same process stage of a reaction system each contain the same catalysts.

9. CKP method according to any one of Claims 1 to 8, **characterized in that** the tubular reactors of the same process stage of a reaction system each contain the same catalysts, the same amounts of catalyst, wherein preferably the catalysts are present in particle form and the particle diameter is in the range of 1 to 10,000 µm, and/or wherein the catalysts are diluted with inert material and wherein the catalysts of a process stage contain the same degree of dilution with inert material, which is **characterized by** a mass ratio of catalyst to inert material in the range of 0.01:100 to 100:1.

10. CKP method according to any one of Claims 1 to 9, **characterized in that** the composition of the product streams is analyzed and the result of the analysis of the different product streams is correlated in a manner that comprises forming a difference, wherein the mass balance is **characterized by** a standard deviation of +/- 10 wt.%.

11. CKP method according to any one of Claims 1 to 10, **characterized in that** the reactant streams supplied to the at least one reaction system are selected from the group consisting of natural gas - in the form of light, medium, or heavy natural gas - crude oil, naphtha, gasoline, kerosene, diesel, middle distillates, vacuum gas oil, atmospheric or vacuum residual oil, mineral oils, bio-derived oils, hydrogen, or synthesis gas, and the reactions carried out by means of the method are reactions from the field of refining, petrochemistry, or synthesis gas chemistry.

12. CKP method according to any one of Claims 1 to 11, **characterized in that** the method is carried out at a pressure in the range of 1 to 500 bara, wherein the liquid reactants are supplied at an LHSV in the range of 0.05 to 20 h⁻¹ and the gases are supplied at a GHSV in the range of 10 to 50,000 h⁻¹.

## Revendications

1. Procédé de caractérisation de processus catalytiques, ci-après dénommé procédé CKP, dans un système réactionnel comprenant deux ou plusieurs lignes réactionnelles disposées en parallèle, présentant un nombre différent de réacteurs tubulaires, et dans lequel une ligne réactionnelle individuelle comprend plusieurs réacteurs tubulaires connectés en série ou un seul réacteur tubulaire, les conduites de liaison entre les réacteurs tubulaires ne comportant pas de conduites de liaison avec des vannes de commutation, ou les conduites de liaison entre les réacteurs tubulaires étant uniquement équipées de vannes de commutation qui constituent des éléments d'alimentation, et il est renoncé au prélèvement d'échantillons intermédiaires, et les conduites de liaison présentant un volume intérieur inférieur de 50 % au volume intérieur du réacteur tubulaire, et le procédé comprenant les étapes suivantes :
i) les réacteurs tubulaires individuels des lignes réactionnelles sont remplis de matériau catalyseur,
ii) un flux de réactifs est alimenté à chaque ligne réactionnelle, les flux de réactifs présentant chacun la même composition chimique,
iii) les flux de réactifs alimentés aux lignes réactionnelles sont soumis à un nombre différent d'étapes de procédé dans les différentes lignes réactionnelles, une étape de procédé individuelle comprenant soit un type de réaction et/ou un degré de conversion d'une réaction donnée,
iv) les flux de produits extraits des lignes réactionnelles disposées en parallèle sont soumis à une caractérisation analytique,
v) les données obtenues lors de la caractérisation analytique des flux de produits issus des différentes lignes réactionnelles sont mises en relation.

2. Procédé CKP selon la revendication 1, **caractérisé en ce que**
deux ou plusieurs systèmes réactionnels sont inclus et les étapes i) - v) ou respectivement les étapes ii) - v) sont effectuées simultanément dans les deux ou plusieurs systèmes réactionnels.

3. Procédé CKP selon la revendication 1 ou la revendication 2, **caractérisé en ce que** l'étape ii) est **caractérisée en ce que** les flux de réactifs individuels alimentés au premier espace réactionnel respectif de chaque ligne réactionnelle individuelle au sein d'un système réactionnel présentent la même composition chimique et/ou **en ce que** les flux de réactifs individuels coïncident dans au moins une grandeur de débit choisie dans le groupe comprenant le débit molaire, le débit volumique et le débit massique.

4. Procédé CKP selon l'une des revendications 1 à 3, **caractérisé en ce que** le nombre d'étapes de procédé A_{PS} est compris dans la plage de 2 à 40 et/ou le nombre de procédés CKP effectués simultanément est compris dans la plage de 2 à 20.

5. Procédé CKP selon l'une des revendications 1 à 4, **caractérisé en ce que** l'étape iii) est en outre **caractérisée en ce qu'**un flux de réactifs supplémentaire est alimenté aux espaces réactionnels en aval des lignes réactionnelles individuelles au sein d'un système réactionnel, à savoir la même composition et la même quantité à chaque espace réactionnel en aval.

6. Procédé CKP selon l'une des revendications 1 à 5, **caractérisé en ce que** les espaces réactionnels de différentes étapes de procédé d'un système réactionnel sont maintenus à des températures différentes et les espaces réactionnels des mêmes étapes de procédé d'un système réactionnel sont maintenus à la même température, la température étant comprise dans la plage de -25 à 900 ° C.

7. Procédé CKP selon l'une des revendications 1 à 6, **caractérisé en ce que** les espaces réactionnels sont configurés sous forme de réacteurs tubulaires dont le diamètre intérieur est compris dans la plage de 2 à 50 mm et dont la longueur est comprise dans la plage de 5 à 150 cm.

8. Procédé CKP selon l'une des revendications ou selon l'une des revendications 10 à 11, **caractérisé en ce que** les réacteurs tubulaires de la même étape de procédé d'un système réactionnel contiennent chacun les mêmes catalyseurs.

9. Procédé CKP selon l'une des revendications 1 à 8, **caractérisé en ce que** les réacteurs tubulaires de la même étape de procédé d'un système réactionnel contiennent chacun les mêmes catalyseurs, les mêmes quantités de catalyseur, les catalyseurs se présentant de préférence sous forme particulaire et le diamètre des particules étant compris dans la plage de 1 à 10 000 µm, et/ou les catalyseurs étant dilués avec un matériau inerte, et les catalyseurs d'une étape de procédé contenant le même degré de dilution avec le matériau inerte, **caractérisé par** un rapport massique catalyseur/matériau inerte compris dans la plage de 0,01 : 100 à 100 : 1.

10. Procédé CKP selon l'une des revendications 1 à 9, **caractérisé en ce que** la composition des flux de produits est analysée et le résultat de l'analyse des différents flux de produits est mis en relation par une opération comprenant une formation de différence, le bilan massique étant **caractérisé par** un écart-type de +/- 10 % en masse.

11. Procédé CKP selon l'une des revendications 1 à 10, **caractérisé en ce que** les flux de réactifs alimentés au moins à un système réactionnel sont choisis dans le groupe comprenant le gaz naturel - sous forme de gaz naturel léger, semi-léger ou lourd -, le pétrole brut, le naphta, l'essence, le kérosène, le diesel, les distillats moyens, le gazole sous vide, le résidu atmosphérique ou sous vide, les huiles minérales, les huiles d'origine biologique, l'hydrogène ou le gaz de synthèse, et les réactions effectuées au moyen du procédé sont des réactions relevant du domaine du raffinage, de la pétrochimie ou de la chimie du gaz de synthèse.

12. Procédé CKP selon l'une des revendications 1 à 11, **caractérisé en ce que** le procédé est mis en œuvre à une pression comprise dans la plage de 1 à 500 bara, les réactifs liquides étant alimentés avec une LHSV comprise dans la plage de 0,05 à 20 h⁻¹ et les gaz avec une GHSV comprise dans la plage de 10 à 50 000 h⁻¹.
